(19) Europäisches Patentamt
European Patent Office
Office européen des brevets

(11) **EP 2 461 594 A2**

## (12) EUROPEAN PATENT APPLICATION

(43) Date of publication:
**06.06.2012 Bulletin 2012/23**

(51) Int Cl.:
***H04N 13/02*** *(2006.01)*

(21) Application number: **11186484.9**

(22) Date of filing: **25.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.12.2010 JP 2010269784**

(71) Applicant: **Sony Corporation**
**Tokyo 108-0075 (JP)**

(72) Inventors:
• **Yamazaki, Toshio**
**Minato-ku, Tokyo 108-0075 (JP)**
• **Kobayashi, Seiji**
**Minato-ku, Tokyo 108-0075 (JP)**

(74) Representative: **Horner, David Richard**
**D Young & Co LLP**
**120 Holborn**
**London EC1N 2DY (GB)**

(54) **Image processing device, image processing method, and program**

(57) An image processing method in an image processing device includes causing an image input unit to input a two-dimensional image signal, causing an image conversion unit to input an image signal output from the image input unit and to generate and output a left eye image and a right eye image used for realizing binocular stereoscopic viewing, and causing an image output unit to output the left eye image and the right eye image output from the image conversion unit, wherein in the image conversion, the amount of spatial characteristic of the input image signal is extracted and the image generation of at least one of the left eye image and the right eye image is performed on the basis of image conversion processing in which enhancement processing to which the amount of characteristic is applied is performed on the input image signal.

FIG. 7

**Description**

BACKGROUND

The present invention relates to an image processing device, an image processing method, and a program, and in particular, relates to an image processing device, an image processing method, and a program each of which executes image conversion for a two-dimensional image, thereby generating a binocular parallax image corresponding to stereoscopic viewing.

In the past, there have been proposed various devices and methods in each of which a two-dimensional image is converted into a binocular parallax image corresponding to stereoscopic viewing. The binocular parallax image generated on the basis of the two-dimensional image includes a pair of a left eye image observed by a left eye and a right eye image observed by a right eye. The binocular parallax image including a pair of these left eye image and right eye image is displayed on a display device capable of separating and presenting the left eye image and the right eye image to the left eye and right eye of an observer, respectively, and hence the observer can perceive the image as a stereoscopic image.

Techniques of the related art disclosed with respect to the generation of such an image or display processing for such an image include the following techniques.

For example, Japanese Unexamined Patent Application Publication No. 9-107562 discloses an image processing configuration for a moving image moving in a horizontal direction. Specifically, a configuration is adopted in which an original image is output as one of a left eye image and a right eye image, and an image delayed in units of fields is output as the other. Using such image output control, an object moving in a horizontal direction is caused to be perceived to be located on the near side of a background.

In addition, Japanese Unexamined Patent Application Publication No. 8-30806 proposes a device in which, by shifting a left eye image and a right eye image by a predetermined amount in a horizontal direction with respect to a still image or an image moving less, the image is perceived to float up.

In addition, Japanese Unexamined Patent Application Publication No. 10-51812 proposes a method in which an image is divided into a plurality of parallax calculation regions and a pseudo depth is calculated from the amount of characteristic of the image in each region, thereby shifting a left eye image and a right eye image in directions opposite to each other on the basis of the depth.

In addition, in Japanese Unexamined Patent Application Publication No. 2000-209614, a proposal is made in which, while, in the same way as in Japanese Unexamined Patent Application Publication No. 10-51812, the horizontal delay amounts of a left eye image and a right eye image are changed on the basis of a delay amount calculated from the amount of characteristic of an image, a retinal image difference is caused not to occur more than necessary by restricting the horizontal delay amount, thereby preventing eyes from fatiguing.

Furthermore, in Japanese Unexamined Patent Application Publication No. 2005-151534, a method is proposed in which the amounts of characteristics in an upper portion and a lower portion in an image are calculated and a synthesis ratio between a plurality of scene structures representing prepared depth information is adjusted, thereby representing the image with the combination of simple structures.

Incidentally, in the above-mentioned techniques of the related art, the following problems occur.

In an image conversion device described in Japanese Unexamined Patent Application Publication No. 9-107562, good stereoscopic viewing is available only for an object moving at a constant velocity in a horizontal direction. In an image with a plurality of moving subjects or an image including a complex movement, binocular parallax is not properly set, and an object is unnaturally placed or a retinal image difference becomes too large. Therefore, it may be considered that it is difficult for stereoscopic viewing to come into effect.

In addition, in an image conversion device described in Japanese Unexamined Patent Application Publication No. 8-30806, the whole image plane is only shifted for the still image or the image moving less, and hence it is difficult to represent the anteroposterior relationship of an object within the image.

In each of image conversion devices described in Japanese Unexamined Patent Application Publication No. 10-51812 and Japanese Unexamined Patent Application Publication No. 2000-209614, while the pseudo depth is estimated from the amount of characteristic of the image, the estimation is based on the assumption that the degree of sharpness of an image located in front of an image plane is high, the brightness thereof is high, the color saturation thereof is high, or the like, and correct estimation is not necessarily performed. Therefore, since an erroneous retinal image difference is provided for an object whose depth estimation has been erroneous, the object is erroneously placed.

An image conversion device described in Japanese Unexamined Patent Application Publication No. 2005-151534 has a configuration in which the structure of the image is applied to a relatively simple finite structure, and an unnatural depth is prevented from occurring. However, a relatively large retinal image difference occurs in a generated binocular parallax image, which is a problem shared by all the above-mentioned techniques of the related art. While this binocular parallax image is stereoscopically displayed using a stereoscopic display device, usually a stereoscopic display device is utilized where an image is observed with special glasses used for stereoscopic viewing being worn, the special glasses complying with a passive-glasses method in which images to be individually observed by right-and-left eyes are separated using a polarization filter or a color filter, an active-glasses method in which images are temporally separated right and left using a liquid crystal shutter, or the like.

When a binocular parallax image for which a large retinal image difference is provided is viewed, it is possible to perceive a stereoscopic effect according to the retinal image difference in a state in which such glasses used for stereoscopic viewing are worn. However, when an image plane is viewed in a state in which the glasses are removed, a double image is viewed in which right-and-left images largely overlap with each other. Therefore, it is difficult to observe the image as a usual two-dimensional image. Namely, images converted by these image conversion devices of the related art have been only able to be appreciated in a state in which glasses have been worn.

In addition, it may be considered that a large retinal image difference affects the fatigue of an observer. For example, in Japanese Unexamined Patent Application Publication No. 6-194602, it is described that, when the images of a left eye and a right eye largely deviate from each other, a discrepancy between the control of the angle of convergence and the adjustment of a crystalline lens occurs with respect to visibility in the real world and the discrepancy leads to fatigue in stereoscopic viewing utilizing binocular parallax.

In addition, in each of the image conversion devices described in Japanese Unexamined Patent Application Publication No. 10-51812, Japanese Unexamined Patent Application Publication No. 2000-209614, and Japanese Unexamined Patent Application Publication No. 2005-151534, while the pseudo depth is estimated from the image, it is difficult to detect a detailed depth from one image. For example, it is difficult to perform the estimation of a depth for a fine structure such as tree branches, electric wires, or hairs. Accordingly, it has been difficult for these fine subjects to be caused to have stereoscopic effects.

As a configuration to solve these problems, the present applicant has filed Japanese Unexamined Patent Application Publication No. 2010-63083. Japanese Unexamined Patent Application Publication No. 2010-63083 discloses a configuration in which the amount of spatial characteristic included in an input image is extracted and a left eye image or a right eye image is generated on the basis of conversion processing performed on the input image using the extracted amount of characteristic. In the configuration of Japanese Unexamined Patent Application Publication No. 2010-63083, a high-frequency pass filter such as a differentiator or the like is used as extracting means for the amount of characteristic, and the high-frequency pass filter is caused to strongly function, thereby realizing the enhancement of a stereoscopic effect.

However, in the configuration disclosed in Japanese Unexamined Patent Application Publication No. 2010-63083, there occurs a new problem that high-frequency enhancement due to the high-frequency pass filter occurs and an image becomes unnatural.

SUMMARY

It would be desirable to alleviate the above-mentioned problems, and hence, for example, it is desirable that an erroneous stereoscopic effect is prevented from occurring owing to erroneous depth estimation and an original image or an image close to the original image is caused to be recoverable when right-and-left images are combined. Namely, it is desirable to provide an image processing device, an image processing method, and a program each of which realizes the generation and the presentation of a binocular parallax image that can be appreciated in a state in which glasses complying with stereoscopic viewing are removed and causes the fatigue of an observer to occur less.

Furthermore, it is desirable to provide an image processing device, an image processing method, and a program each of which suppresses high-frequency enhancement due to a high-frequency pass filter such as a differentiator or the like, which occurs as the result of the enhancement of a stereoscopic effect, and realizes the generation and the presentation of a more natural binocular parallax image causing the fatigue of an observer to occur less.

According to an embodiment of the present technology, there is provided an image processing device including an image input unit inputting a two-dimensional image signal, an image conversion unit inputting an image signal output from the image input unit and generating and outputting a left eye image and a right eye image used for realizing binocular stereoscopic viewing, and an image output unit outputting the left eye image and the right eye image output from the image conversion unit, wherein the image conversion unit includes a configuration in which the amount of spatial characteristic of the input image signal is extracted and the image generation of at least one of the left eye image and the right eye image is performed on the basis of image conversion processing in which enhancement processing to which the amount of characteristic is applied is performed on the input image signal, and the image conversion unit further executes at least one of a filtering processing operation which is based on a low-frequency pass filter and to be performed on the input image signal as pre-processing before the extraction of the amount of characteristic, and a filtering processing operation or an image reduction processing operation, which is based on a low-frequency pass filter and to be performed as post-processing on the generated left eye image and right eye image.

Furthermore, in an embodiment of the image processing device of the present technology, the image conversion unit may include a configuration in which a luminance differential signal of the input image signal or a luminance differential signal of a signal after the filtering processing operation based on the low-frequency pass filter has been performed on the input image signal is extracted, the luminance differential signal is set as the amount of characteristic, one conversion signal of a conversion signal obtained by adding the amount of characteristic to the input image signal and a conversion signal obtained by subtracting the amount of characteristic from the input image signal is generated as the left eye image or the right eye image, and a non-conversion signal where the input image signal has been subjected to no processing is output as an image used for an eye different from that of the conversion signal.

Furthermore, in an embodiment of the image processing device of the present technology, the image conversion unit may include a configuration where processing is performed in which a luminance differential signal of the input image signal or a luminance differential signal of a signal after the filtering processing operation based on the low-frequency pass filter has been performed on the input image signal is extracted, the luminance differential signal is set as the amount of characteristic, a signal obtained by adding the amount of characteristic to the input image signal and a signal obtained by subtracting the amount of characteristic from the input image signal are generated, and a pair of the two signals is generated as a pair of the left eye image and the right eye image.

Furthermore, in an embodiment of the image processing device of the present technology, the image conversion unit may include a configuration where processing is performed in which a luminance differential signal of the input image signal or a luminance differential signal of a signal after the filtering processing operation based on the low-frequency pass filter has been performed on the input image signal is extracted, a signal generated by subjecting the luminance differential signal to nonlinear conversion is set as the amount of characteristic, a signal obtained by adding the amount of characteristic to the input image signal or a signal obtained by subtracting the amount of characteristic from the input image signal is generated, and one of these signals is generated as the left eye image or the right eye image.

Furthermore, in an embodiment of the image processing device of the present technology, the image conversion unit may include a configuration where processing is performed in which the left eye image and the right eye image are generated for each of frames included in a moving image.

Furthermore, in an embodiment of the image processing device of the present technology, the image processing device may further include an image output unit outputting the left eye image and the right eye image generated by the image conversion unit, wherein the image output unit includes a configuration where processing is performed in which the left eye image and the right eye image generated by the image conversion unit are alternately output at twice the rate of an input image frame rate.

Furthermore, in an embodiment of the image processing device of the present technology, the image conversion unit may include a configuration where processing is performed in which only one of the left eye image and the right eye image is alternately generated for each of frames included in a moving image.

Furthermore, in an embodiment of the image processing device of the present technology, the image conversion unit may include a configuration where processing is performed in which the left eye image and the right eye image are generated for each of frames included in a moving image, and a binocular parallax image is generated that alternately includes line data configuring the generated left eye image and right eye image.

Furthermore, in an embodiment of the image processing device of the present technology, the image conversion unit may include a configuration where processing is performed in which the left eye image and the right eye image are generated as a setting in which the addition signal of the generated left eye image and right eye image becomes equal to the input signal or in which the addition signal of the generated left eye image and right eye image becomes nearly equal to the input signal.

Furthermore, in an embodiment of the image processing device of the present technology, the image processing device may further include an image display unit displaying an image generated by the image conversion unit.

Furthermore, in an embodiment of the image processing device of the present technology, the image display unit may include a configuration where stereoscopic display processing is performed that is based on a time-division method and in which the left eye image and the right eye image are alternately output.

Furthermore, in an embodiment of the image processing device of the present technology, the image display unit may include a configuration where, when the stereoscopic display processing that is based on the time-division method and in which the left eye image and the right eye image are alternately output is performed, display switching is performed so that timing to switch the output of the left eye image and the right eye image is caused to be synchronized with the shutter switching of a right-and-left eyeglasses unit of eyeglasses worn by an image observer.

Furthermore, in an embodiment of the image processing device of the present technology, the image display unit may include a configuration in which a polarization filter is put on the front surface of a display portion, the polarization filter being set so that a polarization direction varies with respect to each horizontal line, and includes a configuration where a binocular parallax image is displayed that alternately includes line data configuring the left eye image and right eye image generated by the image conversion unit.

Furthermore, according to an embodiment of the present technology, there is provided an image processing method in an image processing device, including causing an image input unit to input a two-dimensional image signal,

causing an image conversion unit to input an image signal output from the image input unit and to generate and output a left eye image and a right eye image used for realizing binocular stereoscopic viewing, and causing an image output unit to output the left eye image and the right eye image output from the image conversion unit, wherein in the image conversion, the amount of spatial characteristic of the input image signal is extracted and the image generation of at least one of the left eye image and the right eye image is performed on the basis of image conversion processing in which enhancement processing to which the amount of characteristic is applied is performed on the input image signal, and there is further executed at least one of a filtering processing operation which is based on a low-frequency pass filter and to be performed on the input image signal as pre-processing before the extraction of the amount of characteristic, and a filtering processing operation or an image reduction processing operation, which is based on a low-frequency pass filter and to be performed as post-processing on the generated left eye image and right eye image.

Furthermore, according to an embodiment of the present technology, there is provided a program causing image processing to be executed in an image processing device, including causing an image input unit to input a two-dimensional image signal; causing an image conversion unit to input an image signal output from the image input unit and to generate and output a left eye image and a right eye image used for realizing binocular stereoscopic viewing; and causing an image output unit to output the left eye image and the right eye image output from the image conversion unit, wherein in the image conversion, the amount of spatial characteristic of the input image signal is extracted and the image generation of at least one of the left eye image and the right eye image is performed on the basis of image conversion processing in which enhancement processing to which the amount of characteristic is applied is performed on the input image signal, and there is further executed at least one of a filtering processing operation which is based on a low-frequency pass filter and to be performed on the input image signal as pre-processing before the extraction of the amount of characteristic, and a filtering processing operation or an image reduction processing operation, which is based on a low-frequency pass filter and to be performed as post-processing on the generated left eye image and right eye image.

In addition, for example, the program according to an embodiment of the present technology is a program that can be provided with a storage medium or a communication medium, which provides various program codes in computer-readable forms to a general-purpose system capable of executing the various program codes. By providing such programs in computer-readable forms, processing according to the programs is realized on a computer system.

Other objects, features, and advantageous effects of embodiments of the present technology will become clear from the detailed description of embodiments of the present technology described later and the drawings attached hereto. In addition, in the present specification, a "system" means a configuration in which a plurality of devices are logically assembled, and is not limited to a configuration in which a device of each configuration is located within a same chassis.

According to the configuration of one embodiment of the present technology, in a configuration in which a two-dimensional image signal is input and a left eye image and a right eye image used for realizing binocular stereoscopic viewing is generated, a configuration is realized in which an image signal that can be stereoscopically viewed is generated using simple signal processing and excessive high-frequency enhancement is reduced.

Specifically, the amount of spatial characteristic of an input image signal is extracted, and different enhancement processing operations to which the amount of characteristic is applied are performed on the input image signal, thereby generating a left eye image and a right eye image. Specifically, signals obtained by adding/subtracting a luminance differential signal for the input image signal or the nonlinear conversion signal of the luminance differential signal to/from the input image signal are regarded as the signals of the left eye image and the right eye image. Furthermore, filtering processing based on a low-frequency pass filter is performed on the input image signal or the generated right and left eye image signals. According to the configuration of one embodiment, an image that can be stereoscopically viewed can be generated using simple signal processing, and a natural image can be generated in which excessive high-frequency enhancement based on a differential signal generated as the amount of characteristic is reduced. In addition, since the addition signal of the left eye image and the right eye image becomes equivalent to the input signal, the addition signal can be observed as a usual two-dimensional image when the image is observed without eyeglasses used for stereoscopic viewing being worn.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

The present invention will be described further, by way of example only, with reference to preferred embodiments thereof as illustrated in the accompanying drawings, in which:

Fig. 1 is a diagram explaining an example of a configuration of an image processing device according to an embodiment of the present technology;

Fig. 2 is a diagram explaining an example of a configuration of an image input unit in the image processing device according to an embodiment of the present technology;

Fig. 3 is a diagram illustrating a flowchart explaining a processing sequence when an input image is a still image, as an example of a processing operation performed in the image input unit in the image processing device according to an embodiment of the present technology;

Fig. 4 is a diagram illustrating a flowchart explaining a processing sequence when an input image is a moving image, as an example of a processing operation performed in the image input unit in the image processing device according to an embodiment of the present technology;

Fig. 5 is a diagram explaining an example of a configuration of an image conversion unit in the image processing device according to an embodiment of the present technology;

Fig. 6 is a diagram explaining an example of nonlinear conversion processing for an image signal, executed in the image conversion unit in the image processing device according to an embodiment of the present technology;

Fig. 7 is a diagram explaining an example of a signal generated in the image conversion unit having no low-frequency pass filter;

Fig. 8 is an example of a signal generated in the image conversion unit in the image processing device according to an embodiment of the present technology and a diagram explaining an example of a signal generated in the image conversion unit having a low-frequency pass filter;

Fig. 9 is a diagram explaining a comparative example of signals generated in the image conversion unit having a low-frequency pass filter and the image conversion unit having no low-frequency pass filter;

Fig. 10 is a diagram explaining an example of processing for generating image signals used for a right eye and a left eye from an input image, executed in the image conversion unit in the image processing device according to an embodiment of the present technology;

Fig. 11 is a diagram explaining an example of processing for generating image signals used for a right eye and a left eye from an input image, executed in the image conversion unit in the image processing device according to an embodiment of the present technology;

Fig. 12 is a diagram explaining an example of processing for generating image signals used for a right eye and a left eye from an input image, executed in the image conversion unit in the image processing device according to an embodiment of the present technology;

Fig. 13 is a diagram explaining an example of processing for generating image signals used for a right eye and a left eye from an input image, executed in the image conversion unit in the image processing device according to an embodiment of the present technology;

Fig. 14 is a diagram explaining a retinal image difference between a right eye image and a left eye image, generated in the image processing device according to an embodiment of the present technology;

Fig. 15 is a diagram explaining a retinal image difference between a right eye image and a left eye image, generated in the image processing device according to an embodiment of the present technology;

Fig. 16 is a diagram explaining a retinal image difference between a right eye image and a left eye image, generated in the image processing device according to an embodiment of the present technology;

Fig. 17 is a diagram explaining a retinal image difference between a right eye image and a left eye image, generated in the image processing device according to an embodiment of the present technology;

Fig. 18 is a diagram illustrating a flowchart explaining a processing sequence executed in the image conversion unit in the image processing device according to an embodiment of the present technology;

Fig. 19 is a diagram explaining an example of a configuration of the image conversion unit in the image processing device according to an embodiment of the present technology;

Fig. 20 is a diagram explaining an example of a configuration of the image conversion unit in the image processing device according to an embodiment of the present technology;

Fig. 21 is a diagram explaining an example of a configuration of the image conversion unit in the image processing device according to an embodiment of the present technology; and

Fig. 22 is a diagram explaining an example of a configuration of the image processing device according to an embodiment of the present technology.

DETAILED DESCRIPTION OF EMBODIMENTS

Hereinafter, the details of an image processing device, an image processing method, and a program according to an embodiment of the present technology will be described with reference to drawings. The descriptions thereof are performed in accordance with the following items.

1. First Embodiment of Image Processing Device of Present Technology

1-1. Overview of Configuration and Processing of Image Processing Device According to Embodiment of Present Technology

1-2. Configuration and Output Examples of Right-and-Left Eye Images Generated in Image Processing Device According to Embodiment of Present Technology

1-3. Retinal Image Difference between Right-and-Left Eye Images Generated in Image Processing Device According to Embodiment of Present Technology

1-4. Processing Sequence of Image Conversion Unit in Image Processing Device According to Embodiment of Present Technology

2. Another Embodiment of Image Processing Device of Present Technology

2-1. Embodiment where Low-Frequency Pass Filter is Set in Stage Posterior to Image Synthesis Unit (Second Embodiment)

2-2. Embodiment where Low-Frequency Pass Filters Are Set in Both Stage Anterior to Differentiator and Stage Posterior to Image Synthesis Unit (Third Embodiment)

2-3. Embodiment where Image Reduction Unit Is Set in Stage Posterior to Image Synthesis Unit (Fourth Embodiment)

3. Example of Configuration of Image Processing Device Including Image Display Unit

[1. First Embodiment of Image Processing Device of Present Technology]

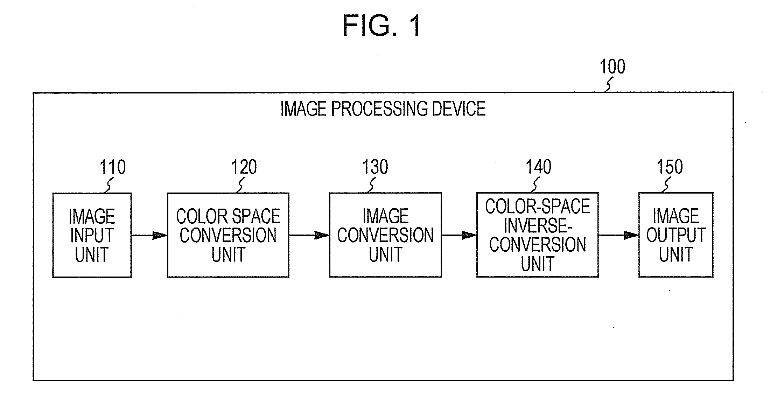

First, a first embodiment of an image processing device of the present technology will be described with reference to Fig. 1 and subsequent drawings.

(1-1. Overview of Configuration and Processing of Image Processing Device According to Embodiment of Present Technology)

Fig. 1 is a diagram illustrating an embodiment of an image processing device according to the present technology. In an image input unit 110, an image processing device 100 receives a still image file output from a digital still camera or the like or moving image data output from a camcorder or the like, and converts the still image file or the moving image data into an internal data format. Here, the internal data format is baseband moving image data, and is the video data of the three primary colors of red (R), green (G), and blue (B) or the video data of luminance (Y) and color differences (Cb, Cr). An identification signal of a color space is superposed on the internal data format, and any color space may be adopted with which a color space conversion unit 120 in a subsequent stage complies.

The video data output from the image input unit 110 is input to the color space conversion unit 120, and converted into a luminance signal and color-difference signals. At this time, when the input video data is compatible with the processing data of an image conversion unit 130, for example, when the input video data complies with a Y/Cb/Cr color space, the color space conversion unit 120 outputs the input video data without converting a color space. When the input video data complies with an R/G/B color space or another color space, the color space conversion unit 120 converts the input video data into luminance (Y) and color difference (Cb, Cr) signals and outputs the luminance (Y) and the color difference (Cb, Cr) signals.

In addition, the color space of the video data output from the color space conversion unit 120 is not limited to the Y/Cb/Cr color space, and any color space may be adopted that is compatible with the processing data of the image conversion unit 130 and is a color space in which a luminance component and color components are separated. For example, a luminance signal (Y) and color-difference signals (U, V) may also be used.

The video data output from the color space conversion unit 120 is input to the image conversion unit 130. The image conversion unit 130 generates binocular parallax images used for a left eye and a right eye on the basis of processing described later, and combines these images in accordance with the format of a stereoscopic display device to output these images. Namely, the image conversion unit 130 extracts the amount of spatial characteristic of an input image signal, and performs different enhancement processing operations to which the extracted amount of characteristic is applied, thereby generating a left eye image and a right eye image.

The video data output from the image conversion unit 130 is input to a color-space inverse-conversion unit 140, and converted from the Y/Cb/Cr color space into a color space complying with an output image format. At this time, when the output image format complies with of the Y/Cb/Cr color space, the color-space inverse-conversion unit 140 outputs the video data without converting the color space thereof. While, in this way, Fig. 1 illustrates a configuration including the color space conversion unit 120 and the color-space inverse-conversion unit 140, the configuration including them is not a necessary configuration and a configuration may be adopted in which these are omitted.

The video data output from the color-space inverse-conversion unit 140 is input to an image output unit 150. The image output unit 150 converts the binocular parallax images, converted in the image conversion unit 130, into video data receivable in an externally-connected stereoscopic display device capable of displaying the binocular parallax images and realizing stereoscopic viewing, and outputs the video data.

In addition, while, in the present embodiment, a method is described in which, when the still image is input, the still image is converted into video data in the image input unit 110, the configuration is not limited to the method and a configuration may be adopted in which one still image is converted into two images of a left eye image and a right eye image and a file is output as two still images to a memory card or the like, for example.

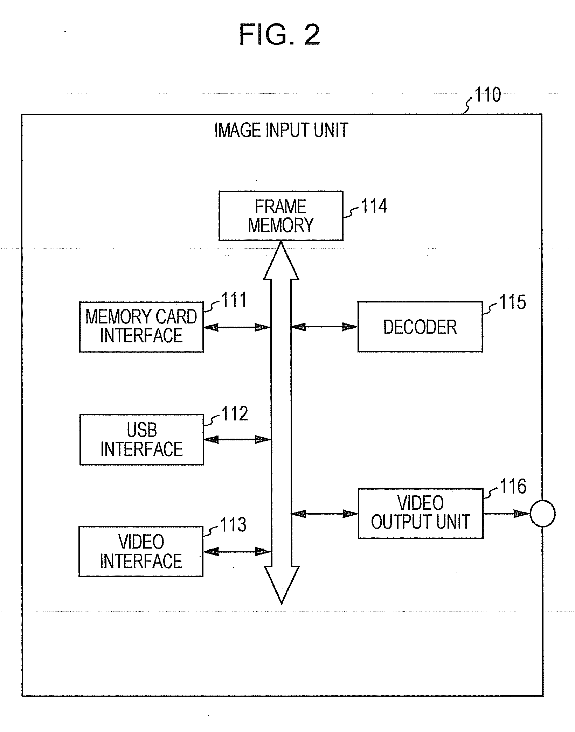

Fig. 2 is a block diagram illustrating the configuration of an embodiment of the image input unit 110. The image input unit 110 includes a memory card interface 111 for inputting a still image file or the like, a USB interface 112 for directly connecting a video device, a video interface 113 for inputting a video signal, a frame memory 114, a decoder 115, and a video output unit 116.

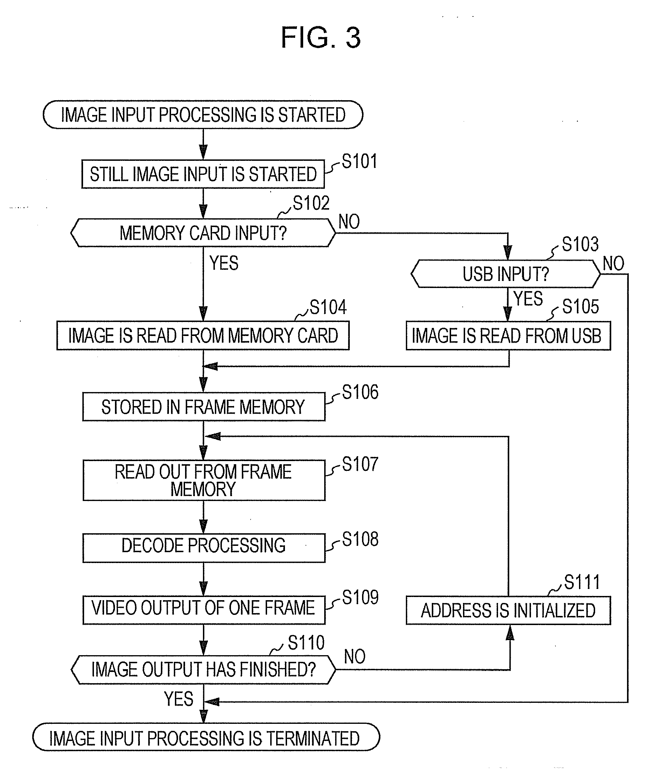

As an example of the processing performed in the image input unit 110, a processing sequence when a still image is input will be described with reference to a flowchart illustrated in Fig. 3.

In Step S101, the image input unit 110 starts inputting a still image.

In Step S102, the image input unit 110 confirms whether or not a memory card has been inserted into the memory card interface 111, and determines whether or not image data is to be input from the memory card. When the memory card has been inserted, the processing proceeds to Step S104, and when the memory card has not been inserted, the processing proceeds to Step S103.

In Step S103, the image input unit 110 confirms whether or not an external device from which a still image can be input is connected to the USB interface 112, and determines whether or not image data is to be input from the USB interface 112. When a USB device is connected, the processing proceeds to Step S105, and when the USB device is not connected, image input processing is terminated.

Here, in order to determine which medium moving image data is input from, a method may be adopted in which an operation unit not illustrated is used, thereby indicating an input device.

In Step S104, the image input unit 110 reads therein image data from a still image file recorded in the memory card. At this time, the selection of a still image file within the memory card may be performed using the operation unit not illustrated, and the still image file may also be automatically selected following an order decided on the basis of some criterion.

In Step S105, the image input unit 110 reads therein still image data from the external device connected to the USB interface. At this time, the selection of a still image file within the external device may be performed using the operation unit not illustrated, and the still image file may also be automatically selected following an order decided on the basis of some criterion.

In Step S106, the image input unit 110 stores the still image data read is Step S104 or Step S105 in the frame memory 114.

In Step S107, the image input unit 110 reads out still image data from the frame memory 114 on the basis of a control unit not illustrated. At this time, a read address indicates the forefront of the image data stored in Step S106.

In Step S108, the image input unit 110 performs the decode processing of a still image. Since usually the still image data has been subjected to image compression in accordance with a format specified using Joint Photographic Experts Group (JPEG) or the like, the decoder 115 implements image expansion processing complying with an image format, and restores baseband image data.

In Step S109, the image input unit 110 outputs the decoded still image data as one frame of video data. Here, the format of the video data complies with a format output in the image output unit 150. Namely, when, in the image output unit 150, the video data is output as video data of High Definition (HD) resolution and 60 frames per second, a control unit not illustrated generates a video synchronization signal of High Definition (HD) resolution and 60 frames per second and outputs the video synchronization signal with attaching a still image within the valid region of the signal.

In Step S110, it is determined whether or not the image output processing in the image output unit 150 has finished. When the image output processing has finished, the image input processing is terminated. When the image output processing has not finished, the processing proceeds to Step S111.

In Step S111, the image input unit 110 initializes the read address of the frame memory 114, and indicates the forefront of the still image data stored in Step S106. When the address initialization in Step S111 has finished, the processing proceeds to Step S107, and subsequently, processing operations in Step S107 to Step S111 are repeated.

In such a way as described above, when the still image is input, the image input unit 110 converts the still image into video data in which a same image continues.

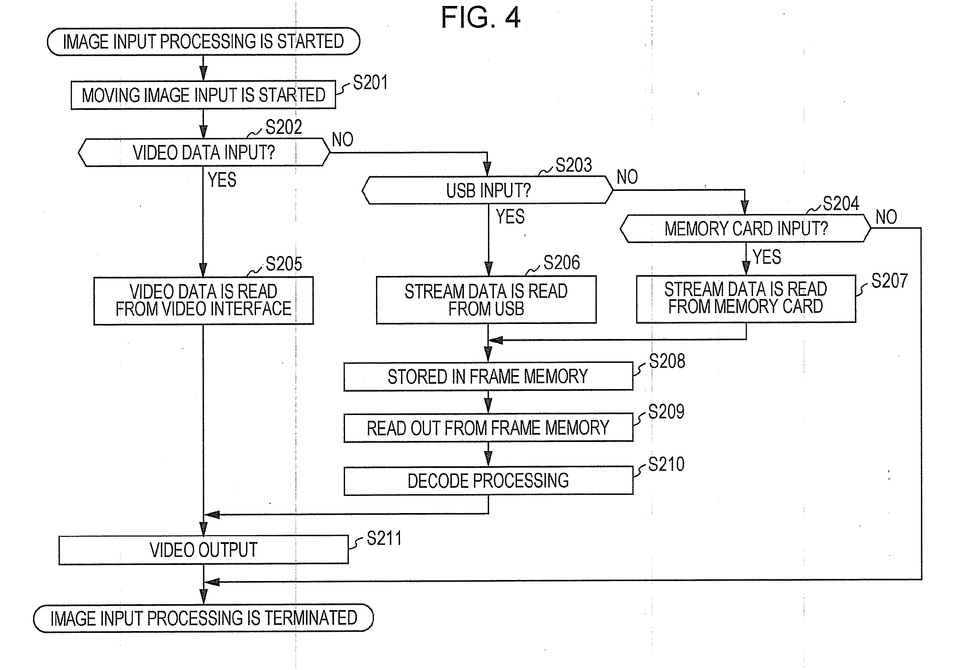

Next, as an example of the processing performed in the image input unit 110, a processing sequence when a moving image is input will be described with reference to a flowchart illustrated in Fig. 4.

In Step S201, the image input unit 110 starts inputting a moving image.

In Step S202, the image input unit 110 confirms whether or not a video signal has been input to the video interface 113, and determines whether or not moving image data is to be input from the video interface. When the video signal has been input, the processing proceeds to Step S205, and when the video signal has not been input, the processing proceeds to Step S203.

In Step S203, the image input unit 110 confirms whether or not an external device from which a moving image can be input is connected to the USB interface 112, and determines whether or not moving image data is to be input from the USB interface 112. When a USB device is connected, the processing proceeds to Step S206, and when the USB device is not connected, the processing proceeds to Step S204.

In Step S204, the image input unit 110 confirms whether or not a memory card has been inserted into the memory card interface 111, and determines whether or not moving image data is to be input from the memory card. When the memory card has been inserted, the processing proceeds to Step S207, and when the memory card has not been inserted, image input processing is terminated.

Here, in order to determine which medium moving image data is input from, a method may be adopted in which an operation unit not illustrated is used, thereby indicating an input device.

In Step S205, the image input unit 110 reads therein video data from the video interface 113. A video signal transmitted using a digital video transmission method such as Digital Video Interface (DVI), High-Definition Multimedia Interface (HDMI), High-Definition Serial Digital Interface (HDSDI), or the like, or a video signal transmitted using an analog video transmission method such as a National Television Standards Committee (NTSC) method, a component method, or the like is input to the video interface 113. When the analog video signal is input, the video interface 113 converts the analog video signal into a baseband signal on the basis of demodulation processing, and after that, converts the baseband signal into a digital signal using an A/D converter not illustrated. On the other hand, when the digital video signal is input, the video interface 113 converts the digital video signal into a baseband signal on the basis of demodulation processing.

In Step S206, the image input unit 110 reads therein moving image data from the external device connected to the USB interface 112. At this time, the selection of a moving image file within the external device may be performed using the operation unit not illustrated, and the moving image file may also be automatically selected following an order decided on the basis of some criterion.

In Step S207, the image input unit 110 reads therein moving image data from a moving image file recorded in the memory card. At this time, the selection of a moving image file within the memory card may be performed using the operation unit not illustrated, and the moving image file may also be automatically selected following an order decided on the basis of some criterion.

Here, the moving image data input through the USB interface 112 and the moving image data stored in the memory card are pieces of stream data compressed on the basis of a moving image compression method specified by Moving Picture Experts Group (MPEG) or the like. Since, in such a compression method, decode processing utilizing a frame memory is necessary, these pieces of stream data are stored in the frame memory 114 in Step S208.

In Step S209, the image input unit 110 reads out moving image data from the frame memory 114 on the basis of a control unit not illustrated.

In Step S210, the image input unit 110 performs the decode processing of a moving image. As described above, since the moving image data stored in the frame memory 114 is the stream data compressed in accordance with MPEG or the like, the decoder 115 implements image expansion processing complying with an image format, and restores a baseband video data.

In Step S211, the video output unit 116 outputs, in an internal data format, the video of one of the video data output from the video interface 113 and the video data output from the decoder 115.

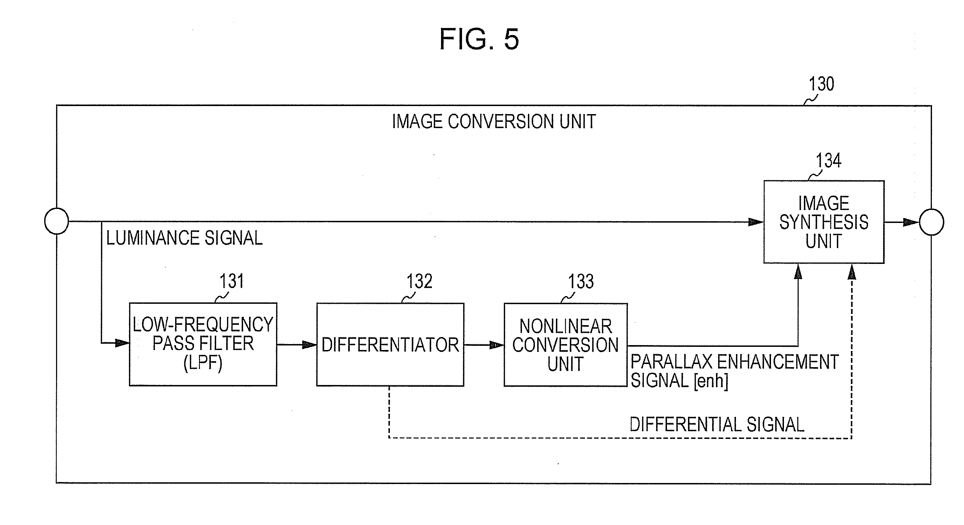

Fig. 5 is a block diagram illustrating the configuration of an embodiment of the image conversion unit 130. The image conversion unit 130 extracts the amount of spatial characteristic of an input image signal, and performs different enhancement processing operations to which the extracted amount of characteristic is applied, thereby generating a left eye image and a right eye image. The image conversion unit 130 includes a low-frequency pass filter (LPF) 131, a differentiator 132, a nonlinear conversion unit 133, and an image synthesis unit 134.

In addition, in Japanese Unexamined Patent Application Publication No. 2010-63083 that is described above and the previous patent application of the present applicant, the configuration of an image conversion unit is disclosed that does not include the low-frequency pass filter (LPF) 131 in the image conversion unit 130 illustrated in Fig. 5. The image conversion unit 130 of an embodiment of the present technology is different in that the low-frequency pass filter (LPF) 131 is added to the configuration.

The low-frequency pass filter (LPF) 131 extracts a luminance signal from video data input to the image conversion unit 130, and generates and outputs, to the differentiator 132, a signal obtained by removing the high-frequency component of the luminance signal using filtering processing based on an LPF. Specifically, for example, the luminance signal of an image signal is input in a horizontal direction, and low-frequency pass filter processing is performed. For example, as the low-frequency pass filter, an FIR filter having 3 TAPs in a horizontal direction is applicable.

In addition, an advantageous effect obtained by adding the low-frequency pass filter (LPF) 131 will be described in detail in a subsequent stage.

The differentiator 132 generates a differential signal with respect to the luminance signal that is output by the low-frequency pass filter (LPF) 131 and whose high-frequency component is removed. Specifically, for example, the luminance signal of the image signal is input in a horizontal direction, and a signal obtained by subjecting the input luminance signal to first derivation is generated. For example, in the first derivation processing, a linear first derivation filter of three taps or the like is used.

The nonlinear conversion unit 133 nonlinearly converts the differential signal output from the differentiator 132, and generates and outputs a parallax enhancement signal [enh].

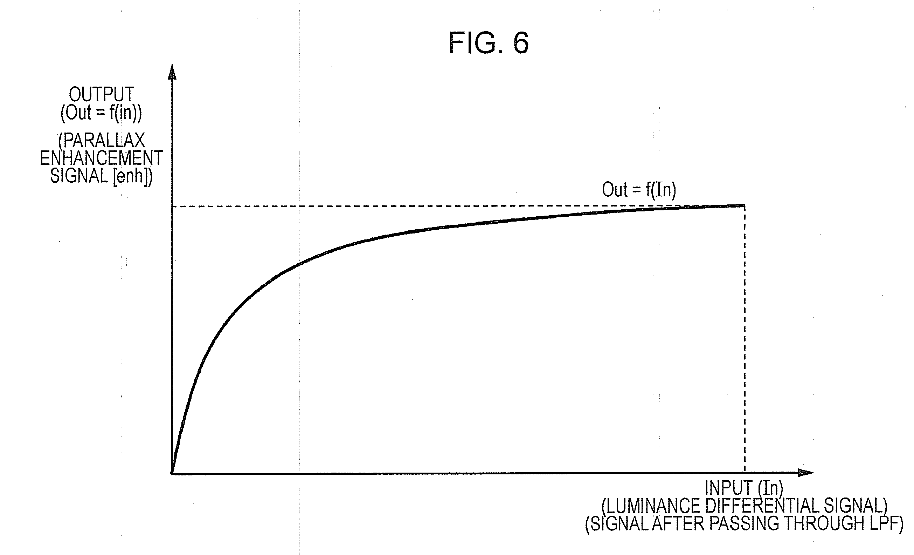

Fig. 6 illustrates an example of nonlinear conversion processing executed in the nonlinear conversion unit 133. A horizontal axis corresponds to an input signal from the differentiator 132, and corresponds to a luminance differential signal. In addition, here, the horizontal axis corresponds to the luminance differential signal after filtering processing based on the low-frequency pass filter (LPF) 131 has been performed.

A vertical axis indicates an output after the nonlinear conversion processing has been performed in the nonlinear conversion unit 133. The nonlinear conversion unit 133 converts an input differential signal (In) on the basis of a preliminarily specified function f(x), and outputs a parallax enhancement signal [enh](Out). Namely, it is assumed that Out = f(In). At this time, various settings are available in the function f(x). For example, as an example of the function f(x),

$$f(x) = x^{\beta}$$

Such an exponential function as illustrated in the above expression is used. $\beta$ is a preliminarily set coefficient, and can be set to various values.

In addition, a conversion function in the nonlinear conversion unit 133 is not limited to the exponential function, and linear conversion may also be implemented.

The image synthesis unit 134 receives the parallax enhancement signal [enh] output from the nonlinear conversion unit 133 and the video data input to the image conversion unit 130, and combines each frame image included in the video data and a parallax enhancement signal, thereby performing processing for generating a left eye image and a right eye image.

In addition, as illustrated with a dotted line in Fig. 5, a configuration may be adopted in which the conversion processing in the nonlinear conversion unit 133 is omitted, the differential signal generated by the differentiator 132 is directly input to the image synthesis unit 134, and the image synthesis unit 134 performs the processing for generating the left eye image and the right eye image, by applying the differential signal.

By applying each frame image included in the video data and the amount of spatial characteristic generated from the frame image, namely, the differential signal of the luminance signal or the parallax enhancement signal [enh] generated by subjecting the differential signal to nonlinear conversion, the image synthesis unit 134 performs the processing for generating the left eye image and the right eye image.

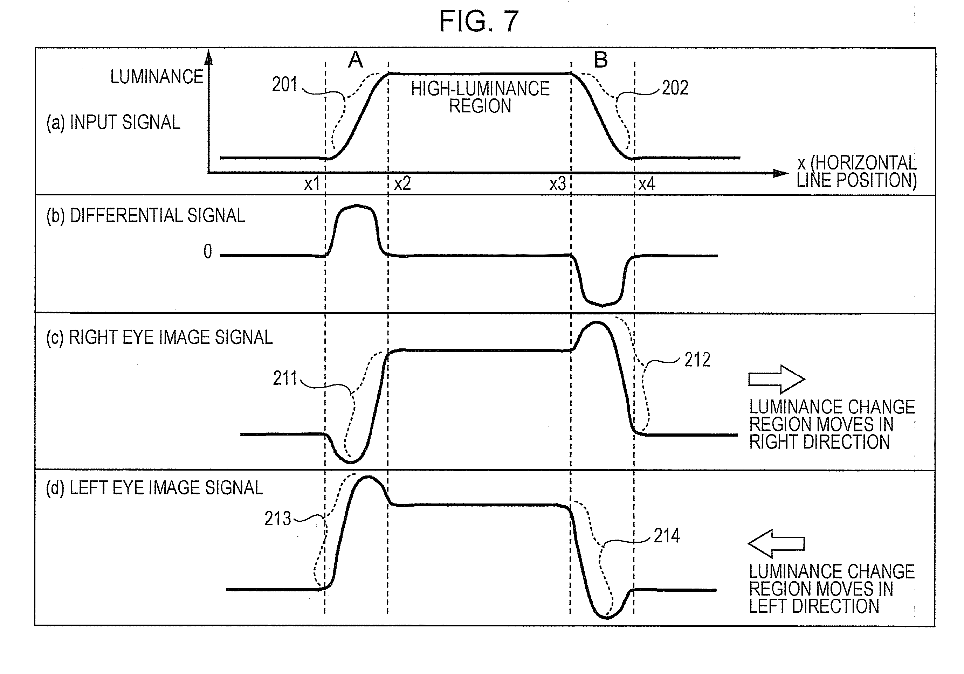

The signal processing executed by the image conversion unit 130 will be described with reference to Fig. 7 to Fig. 9 while applying a specific example of a signal.

In addition, as described above, the configuration described in Japanese Unexamined Patent Application Publication No. 2010-63083 that is the previous patent application of the present applicant is a configuration in which the low-frequency pass filter (LPF) 131 in the image conversion unit 130 illustrated in Fig. 5 is omitted.

The configuration of an embodiment of the present technology is a configuration different in that the low-frequency pass filter (LPF) 131 is added, and in order to easily understand an advantageous effect due to a difference between the configurations, the following examples of signals are illustrated in Fig. 7 to Fig. 9.

(1) Fig. 7: examples of individual signals in a configuration including no low-frequency pass filter (LPF) 131 (the configuration described in Japanese Unexamined Patent Application Publication No. 2010-63083)

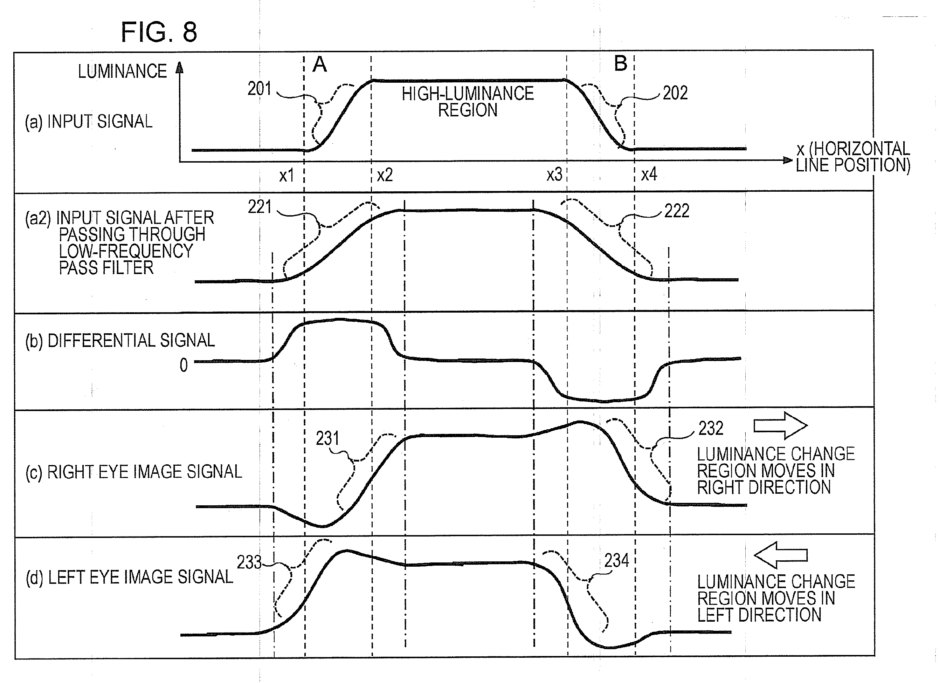

(2) Fig. 8: examples of individual signals in a configuration including the low-frequency pass filter (LPF) 131 (the configuration in Fig. 5 of an embodiment of the present technology)

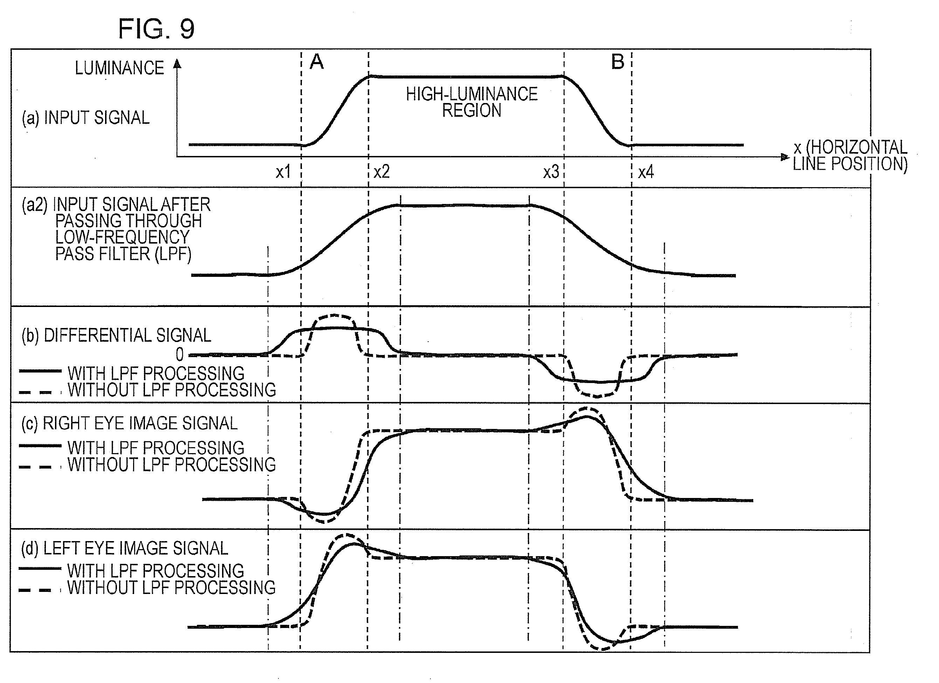

(3) Fig. 9: a signal comparative example between the configuration including the low-frequency pass filter (LPF) 131 and the configuration including no low-frequency pass filter (LPF) 131

First, examples of signals in the configuration described in Japanese Unexamined Patent Application Publication No. 2010-63083, namely, the configuration including no low-frequency pass filter (LPF) 131 will be described with reference to Fig. 7.

In Fig. 7, beginning at the top,

(a) input signal
(b) differential signal
(c) right eye image signal
(d) left eye image signal

these individual signals are illustrated.

The (a) input signal indicates the luminance change of an arbitrary horizontal line in an arbitrary frame in video data. One line is illustrated in which a high-luminance region whose luminance is high exists in the central region thereof. A change in which luminance progressively increases is indicated in a region A extending from a line position (x1) to a line position (x2), a high luminance portion in which high-level luminance is maintained exists in line positions (x2) to (x3), and subsequently, a change in which luminance progressively decreases is indicated in a region B extending from the line position (x3) to a line position (x4).

The (b) differential signal is a differential result of the (a) input signal. Examples illustrated in Fig. 7 are examples of signals corresponding to the configuration including no low-frequency pass filter (LPF) 131 in the image conversion unit 130 illustrated in Fig. 5, and the (b) differential signal is a signal obtained by directly differentiating the (a) input signal in the differentiator 132 without passing the (a) input signal through an LPF.

As illustrated in the drawing, the differential signal generated by the differentiator 132 takes a positive value in the region A in which the luminance change of the (a) input signal becomes positive, and takes a negative value in the region B in which the luminance change of the (a) input signal becomes negative.

The (c) right eye image signal and the (d) left eye image signal are signals generated in the image synthesis unit 134 in the configuration in which the LPF 131 within the image conversion unit 130 illustrated in Fig. 5 is omitted. The image synthesis unit 134 combines the (a) input signal and the parallax enhancement signal [enh] that is a result (the output of the nonlinear conversion unit 133) obtained by subjecting the (b) differential signal to nonlinear conversion in the nonlinear conversion unit 133, thereby generating the (c) right eye image signal and the (d) left eye image signal.

As illustrated in the (c) right eye image signal and the (d) left eye image signal in Fig. 7, the luminance change regions 201 and 202 of the (a) input signal move in a right direction in the (c) right eye image signal, as illustrated in luminance change regions 211 and 212, and the luminance change regions 201 and 202 move in a left direction in the (d) left eye image signal, as illustrated in luminance change regions 213 and 214.

Owing to such movements of the luminance change regions, parallax occurs between the (c) right eye image signal and the (d) left eye image signal. Namely, by executing image display in which the (c) right eye image signal is caused to be observed only by a right eye and the (d) left eye image signal is caused to be observed only by a left eye, the observation of an image in which the parallax exists is realized, and an observer can recognize the image as a three-dimensional image with depth feel.

However, with respect to the signals illustrated in Fig. 7, there occurs a new problem that a differential signal for the input luminance signal, namely, high-frequency enhancement due to the differentiator (high-frequency pass filter) occurs and an image becomes unnatural.

For example, as illustrated in the (c) right eye image signal and the (d) left eye image signal illustrated in Fig. 7, differences in height in the luminance change regions 211 to 214, namely, luminance change amounts, become large compared with differences in height in the luminance change regions 201 and 202 in the (a) input signal. This is an example of the high-frequency enhancement, and in some case, a luminance difference is set to a value larger than that of the original (a) input signal, thereby resulting in an unnatural image.

An embodiment of the present technology solves this problem, and the low-frequency pass filter (LPF) 131 is provided in the image conversion unit 130 illustrated in Fig. 5 so as to solve this problem.

Fig. 8 illustrates examples of signals when the low-frequency pass filter (LPF) 131 is provided.

In Fig. 8, beginning at the top,

(a) input signal
(a2) input signal after passing through the low-frequency pass filter
(b) differential signal
(c) right eye image signal
(d) left eye image signal
these individual signals are illustrated.

The (a) input signal in Fig. 8 is the same signal as (a) in Fig. 7 and indicates the luminance change of an arbitrary horizontal line in an arbitrary frame in video data. One line is illustrated in which a high-luminance region whose luminance is high exists in the central region thereof. A change in which luminance progressively increases is indicated in a region A extending from a line position (x1) to a line position (x2), a high luminance portion in which high-level luminance is maintained exists in line positions (x2) to (x3), and subsequently, a change in which luminance progressively decreases is indicated in a region B extending from the line position (x3) to a line position (x4).

The (a2) input signal after passing through the low-frequency pass filter, in Fig. 8, is a signal obtained by subjecting the (a) input signal to processing based on the low-frequency pass filter (LPF) 131. Owing to the processing based on the low-frequency pass filter (LPF) 131, a luminance change region is changed to a region that changes smoothly.

Namely, in the (a2) input signal after passing through the low-frequency pass filter, the luminance change regions 201 and 202 of the (a) input signal are set as gentle luminance change regions 221 and 222 whose change rates are suppressed.

The (b) differential signal in Fig. 8 is a differential result for the (a2) input signal after passing through the low-frequency pass filter. As illustrated in the drawing, a differential signal generated by the differentiator 132 takes a positive value in the region A in which the luminance change of the (a2) input signal after passing through the low-frequency pass filter becomes positive, and takes a negative value in the region B in which the luminance change becomes negative.

The (b) differential signal illustrated in Fig. 8 is a differential result for the (a2) input signal after passing through the low-frequency pass filter. Differences in height in this differential signal become small compared with the differential signal in (b) in Fig. 7. These comparison signals are as illustrated in (b) in Fig. 9.
(b) in Fig. 9 to (d) in Fig. 9 indicate examples of signals corresponding to the configuration including the low-frequency pass filter (LPF) 131 with solid lines, and examples of signals corresponding to the configuration including no low-frequency pass filter (LPF) 131 with dotted lines.

The (c) right eye image signal and the (d) left eye image signal are signals generated in the image synthesis unit 134 in the image conversion unit 130 illustrated in Fig. 5. The image synthesis unit 134 combines the (a) input signal and the parallax enhancement signal [enh] that is a result (the output of the nonlinear conversion unit 133) obtained by subjecting the (b) differential signal to nonlinear conversion in the nonlinear conversion unit 133, thereby generating the (c) right eye image signal and the (d) left eye image signal.

In the same way as described with reference to Fig. 7, also in the (c) right eye image signal and the (d) left eye image signal, illustrated in Fig. 8, the luminance change regions 201 and 202 of the (a) input signal move in a right direction in the (c) right eye image signal, as illustrated in luminance change regions 231 and 232, and the luminance change regions 201 and 202 move in a left direction in the (d) left eye image signal, as illustrated in luminance change regions 233 and 234.

Owing to such movements of the luminance change regions, parallax (retinal image difference) occurs between the (c) right eye image signal and the (d) left eye image signal. By executing image display in which the (c) right eye image signal is caused to be observed only by a right eye and the (d) left eye image signal is caused to be observed only by a left eye, the observation of an image in which the parallax exists is realized, and an observer can recognize the image as a three-dimensional image with depth feel.

Compared with the (c) right eye image signal and the (d) left eye image signal, illustrated in Fig. 7, in the (c) right eye image signal and the (d) left eye image signal, illustrated in Fig. 8, high-frequency enhancement due to a differentiator (high-frequency pass filter) is suppressed and the unnaturalness of the image is reduced.

As described above, the (c) right eye image signal and the (d) left eye image signal in Fig. 9 indicate examples of signals corresponding to the configuration including the low-frequency pass filter (LPF) 131 with solid lines, and examples of signals corresponding to the configuration including no low-frequency pass filter (LPF) 131 with dotted lines.

The solid lines (with LPF) of the (c) right eye image signal and the (d) left eye image signal in Fig. 9 are compared with the dotted lines (with no LPF) thereof.

Differences in height in the luminance change regions of the dotted lines (with no LPF), namely, the luminance change amounts thereof, become large compared with differences in height in the luminance change region of the (a) input signal, namely, the luminance change amounts thereof.

On the other hand, differences in height in the luminance change regions of the solid lines (with LPF) become smaller than the dotted lines (with no LPF), and have settings closer to the differences in height in the luminance change region of the (a) input signal, namely, the luminance change amounts thereof.

As illustrated in the (b) differential signal in Fig. 9, this is a result from the fact that, in the differential result (solid line) for the input signal after passing through the low-frequency pass filter (LPF), differences in height are set to small values compared with the differential result (dotted line) for the input signal with no LPF.

As a result, in the configuration utilizing the low-frequency pass filter (LPF) of an embodiment of the present technology, the (c) right eye image signal and the (d) left eye image signal become signals having luminance changes close to the input signal with excessive high-frequency enhancement being suppressed.

The luminance level of video data corresponding to the (a) input signal in Fig. 8 is defined as (S), and the signal level of the parallax enhancement signal [enh] obtained by subjecting the differential signal illustrated in (b) in Fig. 8 to nonlinear conversion is defined as (E).

The image synthesis unit 134 receives the video data (S) corresponding to the (a) input signal and a parallax enhancement signal [enh(E)] obtained by subjecting the (b) differential signal to nonlinear conversion with respect to the (a2) input signal after passing through the low-frequency pass filter, and generates a right eye image signal (Right) and a left eye image signal (Left) in accordance with the following Expression 1, for example.

$$\text{Right} = S - E$$
$$\text{Left} = S + E$$
$$\text{... (Expression 1)}$$

Here, the image synthesis unit 134 may subject only one of the left eye image signal (Left) and the right eye image signal (Right) to conversion without converting both the left eye image signal (Left) and the right eye image signal (Right) as illustrated in Expression 1.

Namely,

$$\text{Right} = S - E$$

Left = S

such combinations of signals may also be adopted. Alternatively,

Right = S

$$\text{Left} = S + E$$

such combinations of signals may also be adopted.

On the basis of such processing, a retinal image difference occurs in the right eye image signal (Right) and the left eye image signal (Left), and it is possible to obtain an image causing depth to be perceived. In addition, a relationship between the retinal image difference and the depth perception will be described in a subsequent stage.

In addition, as described above, a configuration may be adopted in which the conversion processing in the nonlinear conversion unit 133 is omitted, the differential signal generated by the differentiator 132 is directly input (the dotted line in Fig. 5) to the image synthesis unit 134, and the image synthesis unit 134 performs the processing for generating the left eye image and the right eye image, by applying the differential signal. In this case, the above-mentioned parallax enhancement signal [enh(E)] is replaced with the differential signal.

In such a way, the image synthesis unit 134 extracts the amount of spatial characteristic of an input image signal, and performs, on the input image signal, different enhancement processing operations to which the amount of characteristic is applied, thereby generating a left eye image and a right eye image. For example, the amount of characteristic is the luminance differential signal of a signal processed on the basis of the low-frequency pass filter (LPF) for the input image signal, or a parallax enhancement signal generated on the basis of the nonlinear conversion processing for the luminance differential signal.

The (c) right eye image signal (Right) in Fig. 8 is a signal obtained by subtracting the parallax enhancement signal [enh(E)] generated on the basis of the nonlinear conversion of the (b) differential signal with respect to the (a2) input signal after passing through the low-frequency pass filter from the (a) input signal.

As illustrated in the (c) right eye image signal in Fig. 8, the (c) right eye image signal (Right) is generated as a signal having the following signal characteristics (c1) to (c3).

(Signal Characteristics)

(c1) A signal region whose luminance is lower than the (a) input signal occurs at least in a partial region in the region A in which the luminance change of the (a) input signal is positive and the (b) differential signal takes a positive value.

(c2) A signal region whose luminance is higher than the (a) input signal occurs at least in a partial region in the region B in which the luminance change of the (a) input signal is negative and the (b) differential signal takes a negative value.

(c3) No luminance change occurs with respect to the (a) input signal, in a region in which the (b) differential signal takes a value of 0.

In addition, the (d) left eye image signal (Left) in Fig. 8 is a signal obtained by adding the parallax enhancement signal [enh(E)] obtained on the basis of the nonlinear conversion of the (b) differential signal with respect to the (a2) input signal after passing through the low-frequency pass filter to the (a) input signal.

As illustrated in the (d) left eye image signal in Fig. 8, the (d) left eye image signal (Left) is generated as a signal having the following signal characteristics (d1) to (d3).

(Signal Characteristics)

(d1) A signal region whose luminance is higher than the (a) input signal occurs at least in a partial region in the region A in which the luminance change of the (a) input signal is positive and the (b) differential signal takes a positive value.

(d2) A signal region whose luminance is lower than the (a) input signal occurs at least in a partial region in the region B in which the luminance change of the (a) input signal is negative and the (b) differential signal takes a negative value.

(d3) No luminance change occurs with respect to the (a) input signal, in a region in which the (b) differential signal takes a value of 0.

As described above, the image synthesis unit 134 combines the (a) input signal and the parallax enhancement signal [enh] that is a result (the output of the nonlinear conversion unit 133) obtained by subjecting the (b) differential signal for the (a2) input signal after passing through the low-frequency pass filter to nonlinear conversion in the nonlinear conversion unit 133, thereby generating the (c) right eye image signal and the (d) left eye image signal.

In addition, for example, when an input signal to be a conversion target is a still image, the image synthesis unit 134 generates the (c) right eye image signal and the (d) left eye image signal on the basis of signal synthesis processing according to the above-mentioned Expression 1, with respect to one frame image included in the still image.

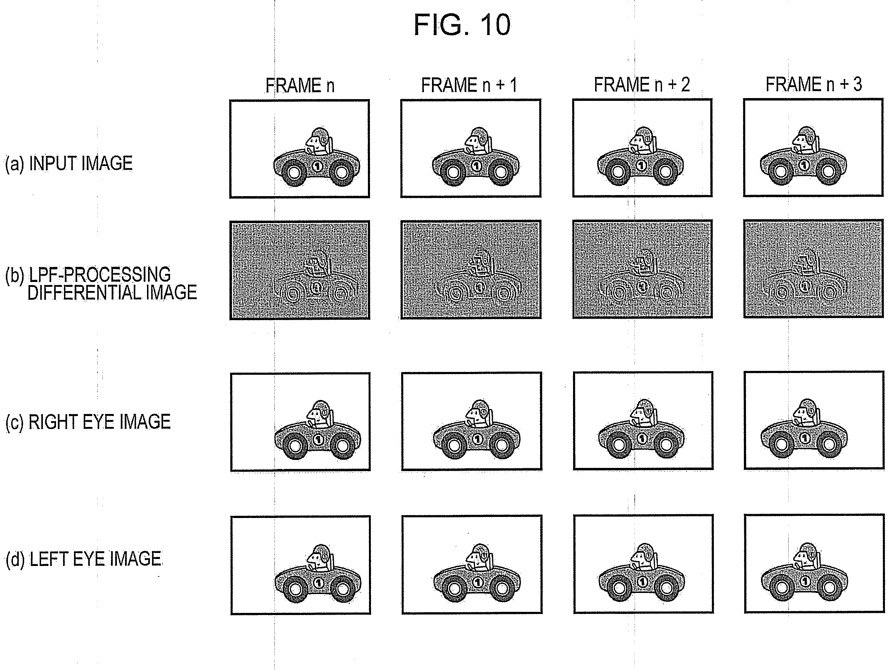

In addition, when an input signal to be a conversion target is a moving image, the (c) right eye image signal and the (d) left eye image signal are generated on the basis of signal synthesis processing according to the above-mentioned Expression 1, with respect to individual frame images included in the moving image. In this regard, however, in the case of the moving image, a setting may be adopted in which the generation forms of the right eye image signal and the left eye image signal are changed in accordance with the control method of the image output unit 150 (refer to Fig. 1) or a display device that finally executes image display. Hereinafter, examples of a plurality of processing operations executed by the image synthesis unit 134 when an input signal to be a conversion target is a moving image (video data) will be described with reference to Fig. 10 and subsequent drawings.

First, an example of a basic processing operation executed by the image synthesis unit 134 when an input signal to be a conversion target is a moving image (video data) will be described with reference to Fig. 10. The example of a processing operation illustrated in Fig. 10 is an example of a processing operation in which the image synthesis unit 134 generates and outputs both images of the left eye image (Left) and the right eye image (Right) with respect to all of the individual frames (frames n, n+1, n+2, n+3 ...) of input video data.

With respect to every frame of (a) input image frames illustrated in Fig. 10, the image synthesis unit 134 combines a luminance signal of the (a) input image frame and a parallax enhancement signal that is the nonlinear conversion result of a (b) differential image signal, thereby generating and outputting a (c) right eye image signal and a (d) left eye image signal, illustrated in Fig. 10. In this case, the image synthesis unit 134 outputs two types of video signals.

For example, a synthesis processing operation is performed in accordance with Expression 1 explained earlier. Namely, when the luminance level of video data corresponding to the (a) input signal in Fig. 8 is defined as (S) and the signal level of the parallax enhancement signal [enh] obtained by subjecting the differential signal illustrated in (b) in Fig. 8 to nonlinear conversion is defined as (E), the left eye image (Left) and the right eye image (Right) are generated in accordance with the following expression.

```
Right Eye Image Signal: Right = S - E


Left Eye Image Signal: Left = S + E
```

In the example of the basic processing operation illustrated in Fig. 10, the image synthesis unit 134 outputs two types of video signals of the right eye images and the left eye images corresponding to all frames. The image output unit 150 (refer to Fig. 1) that has received these two types of signals outputs these pieces of data to a display device realizing stereoscopic viewing. The display device performs output control in accordance with various kinds of display methods realizing the stereoscopic viewing. For example, the display methods of the display device includes an image output method corresponding to a passive-glasses method in which images to be individually observed by right-and-left eyes are separated using a polarization filter or a color filter and an image output method corresponding to an active-glasses method in which right-and-left liquid crystal shutters are alternately opened and closed and hence images to be observed are alternately temporally separated for right-and-left eyes. Using the two types of video signals generated by the image synthesis unit 134, the display device displays an image according to one of the above-mentioned display methods.

(1-2. Configuration and Output Examples of Right-and-Left Eye Images Generated in Image Processing Device According to Embodiment of Present Technology)

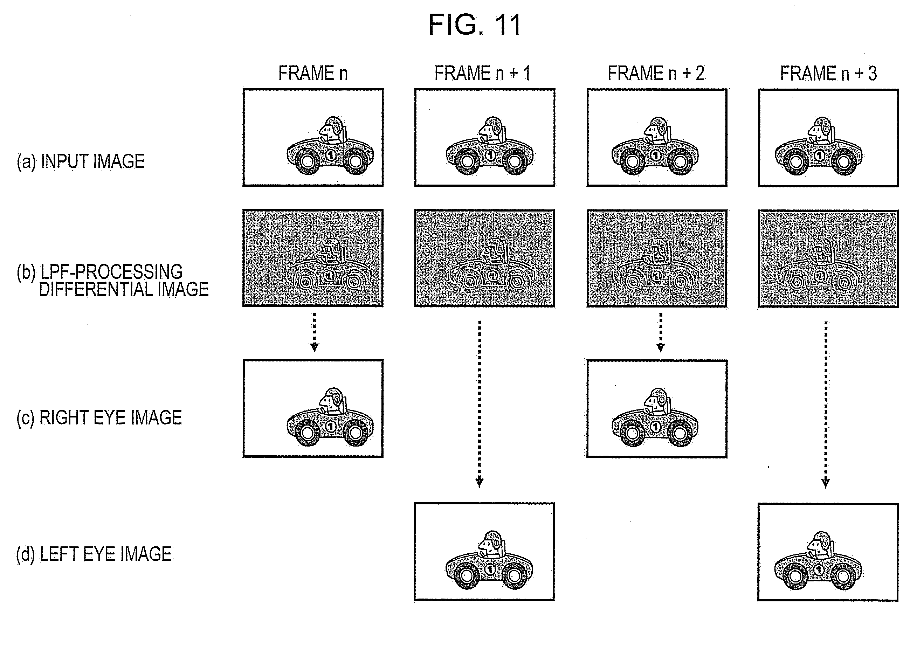

When the image display methods have been preliminarily determined, a setting may be provided in which the image synthesis unit 134 generates and outputs an output image signal according to each image output method. Hereinafter, examples of processing operations according to three different display methods, performed in the image synthesis unit 134, will be described with reference to Fig. 11 to Fig. 13.
The display methods of the display devices finally executing image display are the following three types.

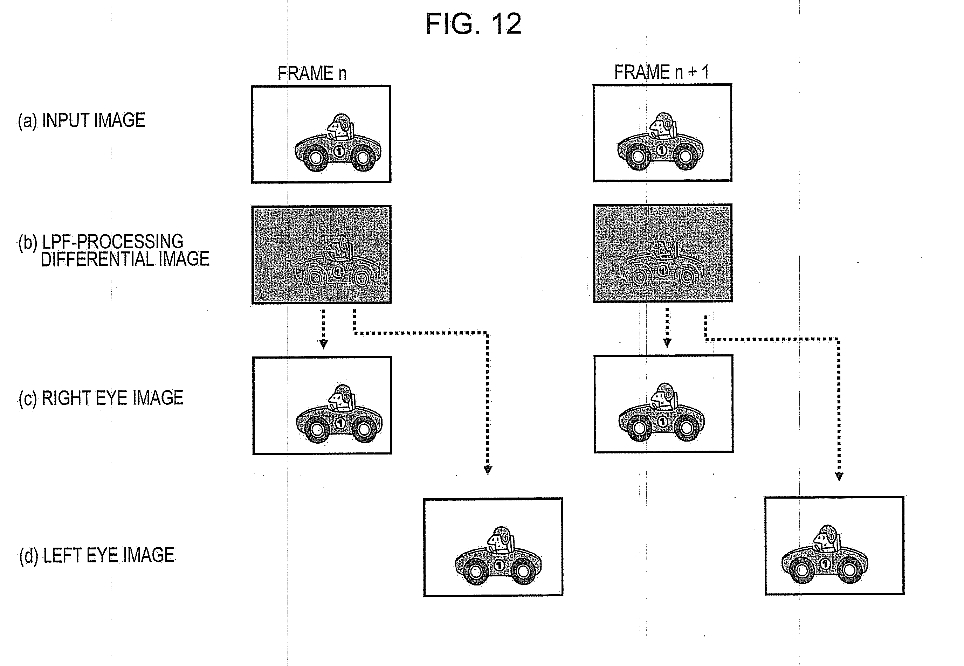

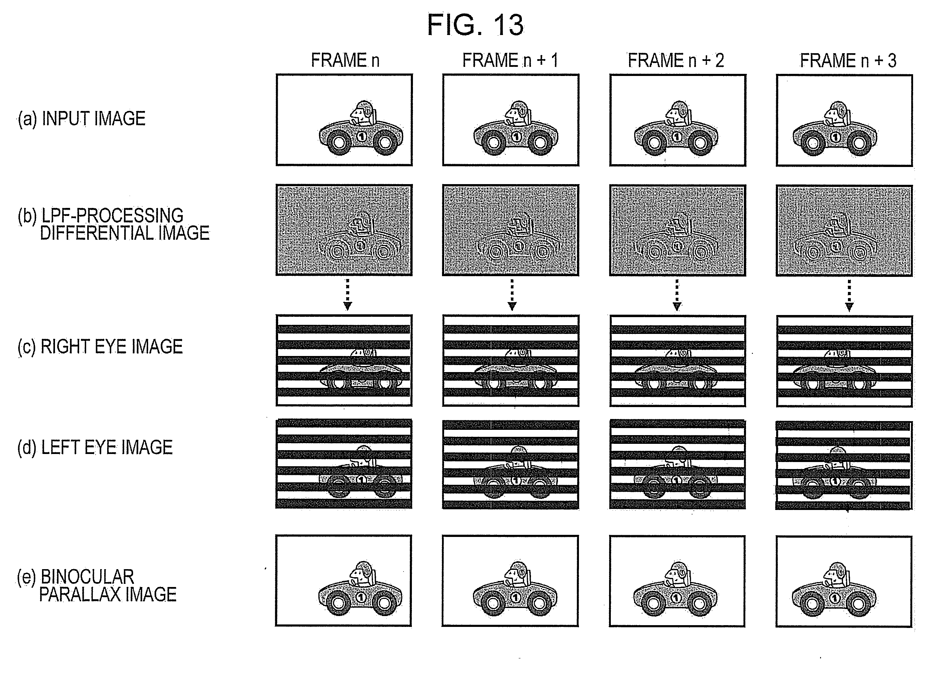

(1) A method in which a left eye image and a right eye image are alternately output in a time division manner (Fig. 11)
For example, this is an image output method corresponding to the active-glasses method in which right-and-left liquid crystal shutters are alternately opened and closed and hence images to be observed are alternately temporally separated for right-and-left eyes.
(2) A method in which an output frame rate is speeded up in a method in which a left eye image and a right eye image are alternately output in a time division manner (Fig. 12)
While this is the same time-division method as in Fig. 11, the output frame rate is speeded up.
(3) A method in which the left eye image and the right eye image are spatially separated and simultaneously output (Fig. 13)

For example, this is an image output method corresponding to the passive-glasses method in which images to be individually observed by right-and-left eyes are separated using a polarization filter or a color filter. For example, in the stereoscopic display device of this space division method, a polarization filter is put on the front surface of display, the polarization filter being set so that a polarization direction varies with respect to each horizontal line, and when being viewed with eyeglasses worn by a user and based on a polarization filter method, a video is separated for a left eye and a right eye every horizontal line and observed.
First, an example of a processing operation performed in the image synthesis unit 134 when the display method of the display device finally executing image display is the method in which a left eye image and a right eye image are alternately output in a time division manner will be described with reference to Fig. 11.
In the case of this image display method, the image synthesis unit 134 generates and outputs the left eye image (Left) and the right eye image (Right) with switching therebetween with respect to each frame, with respect to the individual frames of input video data (frames n, n+1, n+2, n+3 ...).
The odd frame and the even frame of the input video data are individually set as the left eye image and the right eye image (alternatively, the right eye image and the left eye image) and output. With respect to the output image, through the image output unit 150, the left eye image and the right eye image are alternately output in a time division manner in the image display device. The output timing of each image is controlled so as to be synchronized with the opening and closing of eyeglasses worn by a user and based on a liquid-crystal shutter method, for example. Namely, the control is performed so that the left eye image and the right eye image are temporally alternately observed by a left eye and a right eye, respectively.
So as to output to a stereoscopic display device based on such a time-division method, the image synthesis unit 134 executes image synthesis processing operations for the individual frames of the input video data (frame n, n+1, n+2, n+3 ...) with switching between the left eye image and the right eye image in units of frames. Namely, as illustrated in (c) and (d) in Fig. 11, the combination of the left eye image (Left) and the combination of the right eye image (Right) are alternately implemented in units of frames and output.
In the example illustrated in Fig. 11, in a frame n, the right eye image is generated in accordance with Expression 1 described earlier. Namely, when it is assumed that the luminance level of video data in the frame n of an (a) input signal in Fig. 11 is (S) and a signal level of the parallax enhancement signal [enh] is (E), the parallax enhancement signal [enh] being obtained by subjecting a differential signal for a processing signal based on the low-frequency pass filter (LPF) for the frame n illustrated in (b) in Fig. 11 to nonlinear conversion, the right eye image signal (Right) is generated in accordance with the following expression.

```
Right Eye Image Signal: Right = S - E
```

In addition, in a subsequent frame n+1, the left eye image is generated in accordance with Expression 1 described earlier. Namely, when it is assumed that the luminance level of video data in the frame n+1 of an (a) input signal in Fig. 11 is (S) and a signal level of the parallax enhancement signal [enh] is (E), the parallax enhancement signal [enh] being obtained by subjecting a differential signal for a processing signal based on the low-frequency pass filter (LPF) in the frame n+1 illustrated in (b) in Fig. 11 to nonlinear conversion, the left eye image signal (Left) is generated in accordance with the following expression.

```
Left Eye Image Signal: Left = S + E
```

Subsequently, the right eye image and the left eye image are generated and output in a frame n+2 and a frame n+3, respectively, in accordance with an image synthesis processing operation according to Expression 1 described earlier. In addition, following this, the right eye image and the left eye image are alternately generated and output with respect to each frame, in accordance with the image synthesis processing operation according to Expression 1 described earlier. In this method, the image synthesis unit 134 turns out to generate and output one image of the right eye image or the left eye image in response to each frame. Namely, one type of video data is output.

With respect to the output image, through the image output unit 150, the left eye image and the right eye image are alternately output in a time division manner in the image display device. The output timing of each image is controlled so as to be synchronized with the opening and closing of eyeglasses worn by a user and based on a liquid-crystal shutter method, for example. Namely, the control is performed so that the left eye image and the right eye image are temporally alternately observed by a left eye and a right eye, respectively.

In the same way as in Fig. 11, Fig. 12 is an example of a processing operation performed in the image synthesis unit 134 when the display method of the display device finally executing image display is the method in which a left eye image and a right eye image are alternately output in a time division manner. In this regard, however, the example of the processing operation differs from the processing operation illustrated in Fig. 11 in that both images of the left eye image (Left) and the right eye image (Right) are combined with respect to each frame of input video data in accordance with the synthesis processing operation according to Expression 1 described earlier.

The display device performing image output alternately outputs the left eye image and the right eye image at twice the frame rate of the input video data in a time division manner.

In this processing operation, as illustrated in Fig. 12, by applying Expression 1 described earlier, the image synthesis unit 134 generates a (c) right eye image and a (d) left eye image from one frame, for example, the frame n of an (a) input image and a parallax enhancement signal generated from the (b) differential image thereof. Furthermore, by applying Expression 1 described earlier, the image synthesis unit 134 generates the (c) right eye image and the (d) left eye image from a subsequent frame, namely, the frame n+1 of the (a) input image and a parallax enhancement signal generated from the (b) differential image thereof.

In this way, the left eye image and the right eye image are generated from one frame. With respect to two images generated from one frame, namely, the left eye image and the right eye image, through the image output unit 150, the left eye image and the right eye image are alternately output in a time division manner in the image display device.

The image output unit 150 outputs the images so that the images is displayed at twice the frame rate of the input image illustrated in (a) in Fig. 12, in the display device. In addition, in response to this display timing, the opening and closing of the shutters of eyeglasses worn by a user observing the image and, for example, based on the liquid-crystal shutter method are also controlled in synchronization. Namely, the left eye image and the right eye image are caused to be temporally alternately observed by a left eye and a right eye, respectively. In this method, the image synthesis unit 134 outputs the video data at twice the frame rate of one type of input video data.

Fig. 13 illustrates an example of a processing operation performed in the image synthesis unit 134 when outputting to a stereoscopic display device of the space division method. The stereoscopic display device of the space division method is a method in which a polarization filter is put on the front surface of display, the polarization filter being set so that a polarization direction varies with respect to each horizontal line, and when being viewed with eyeglasses worn by a user and based on a polarization filter method, a video is separated and presented for a left eye and a right eye every horizontal line. Namely, the right-and-left polarization filters of the eyeglasses are also filters in which the polarization directions thereof are set so as to be different from each other. In addition, a right eye image illustrated in (c) in Fig. 13 is only observed by a right eye, and a left eye image illustrated in (d) in Fig. 13 is only observed by a left eye.

As illustrated in Fig. 13, in this processing operation, by applying Expression 1 described earlier, the image synthesis unit 134 generates a (c) right eye image and a (d) left eye image from the frame n of an (a) input image and a parallax enhancement signal generated from a (b) differential image for a low-frequency pass filter (LPF) processing signal for the frame n, for example.

Furthermore, the image synthesis unit 134 generates an (e) binocular parallax image illustrated in Fig. 13, from the (c) right eye image and the (d) left eye image. Namely, each of the images of the (c) right eye image and the (d) left eye image is subjected to 1/2 reduction processing in a vertical direction with the phase of each image being shifted by one line. The image synthesis unit 134 alternately combines the left eye image and the right eye image, obtained in such a way, in units of horizontal lines, thereby generating and outputting one (d) binocular parallax image.

The (d) binocular parallax image illustrated in Fig. 13 is an image generated by coupling the valid regions (image display portions other than black lines) of the (c) right eye image and the (d) left eye image with each other. Namely, the (d) binocular parallax image is an image alternately including the individual pieces of line data of the (c) right eye image and the (d) left eye image. In this way, the image synthesis unit 134 generates and outputs the (d) binocular parallax image. In this method, the image synthesis unit 134 outputs one type of video data having the same frame rate as the input image.

The (d) binocular parallax image illustrated in Fig. 13 is output, to the stereoscopic display device of the space division method, by the image output unit 150 so as to be displayed. As described above, in the stereoscopic display device of the space division method, the polarization filter is put on the front surface thereof, the polarization filter being set so that a polarization direction varies with respect to each horizontal line. A user observes with eyeglasses based on a polarization filter method. The right-and-left polarization filters of the eyeglasses are also filters in which the polarization directions thereof are set so as to be different from each other. In addition, a right eye image illustrated in (c) in Fig. 13 is only observed by a right eye, and a left eye image illustrated in (d) in Fig. 13 is only observed by a left eye.

The right eye image signal (Right) and the left eye image signal (Left), described with reference to Fig. 10 to Fig. 13, are images generated in accordance with the expression described earlier (Expression 1). Namely, the right eye image signal (Right) and the left eye image signal (Left) are generated in accordance with the following expression.

$$\texttt{Right = S - E}$$

$$\texttt{Left = S + E}$$

In this regard, however, S is the input signal, and E is the parallax enhancement signal [enh] obtained by subjecting the differential signal D of a processing signal based on the low-frequency pass filter (LPF) for the frame n of the input signal S to nonlinear conversion. In addition, as described earlier, the parallax enhancement signal E is not limited to a signal obtained with the nonlinear conversion of the differential signal D of the input signal S, and the parallax enhancement signal E may also be a signal obtained by implementing linear conversion signal.

(1-3. Retinal Image Difference of Right-and-Left eye images Generated in Image Processing Device According to Embodiment of Present Technology)

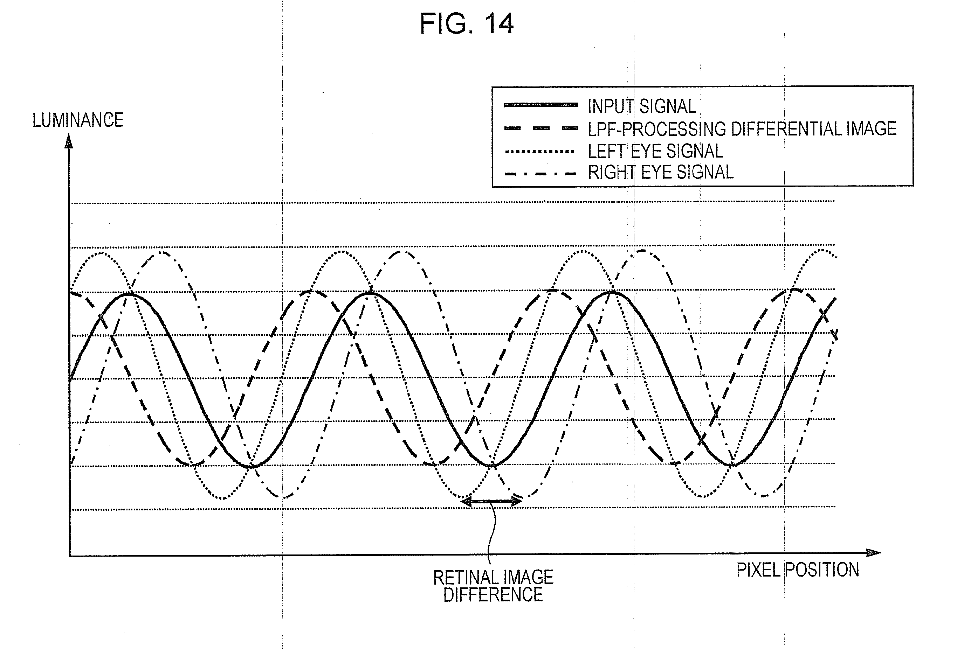

Such right eye image signal (Right) and left eye image signal (Left) are generated, these images are observed by the right eye and the left eye of an observer, and hence it is possible to obtain depth feel. This is a phenomenon based on a retinal image difference between the right eye image and the left eye image. The retinal image difference between the right eye image and the left eye image generated in the image processing device 100 according to an embodiment of the present technology will be described with reference to Fig. 14 to Fig. 17, hereinafter.

In addition, as simply described earlier with reference to Fig. 7 and Fig. 8, the retinal image difference results from the fact that a shift occurs between the (c) left eye image signal and the (d) right eye image signal in the luminance change region. Hereinafter, this principle will be described with reference to mathematical expressions. In addition, in the following description, so as to facilitate understanding, it will be described assuming that the processing based on the low-frequency pass filter (LPF) is omitted. In addition, in the following description, Fig. 14 to Fig. 16 will be described assuming that the nonlinear conversion processing for the differential signal D is omitted and the right eye image signal (Right) and the left eye image signal (Left) are generated in accordance with the following expression, by applying the input signal S and the differential signal D of a processing signal based on the low-frequency pass filter (LPF) for the input signal S.

$$\texttt{Right = S - D}$$

```
Left = S + D
```

Fig. 14 is a diagram explaining a retinal image difference occurring owing to the addition/subtraction of the differential signal. Here, for ease of explanation, how a signal used for a left eye and a signal used for a right eye are generated when a one-dimensional sine-wave signal is input as the input signal is illustrated. The horizontal axis of the drawing indicates a pixel position in the horizontal direction of an image, and the vertical axis thereof indicates the luminance level of a pixel.

The input signal S is expressed by the following expression (Expression 2).

```
S = sin ωx … (Expression 2)
```

At this time, the differential signal D is expressed by the following expression (Expression 3).

```
D = cos ωx … (Expression 3)
```

At this time, the left eye signal L and the right eye signal R are expressed by the following expressions, (Expression 4) and (Expression 5).

[Mathematical Formula 1]

$$L = S + D = \sin \omega x + \cos \omega x = \sqrt{2} \sin\left(\omega x + \frac{\pi}{4}\right)$$

… (Mathematical Expression 4)

$$R = S - D = \sin \omega x - \cos \omega x = \sqrt{2} \sin\left(\omega x - \frac{\pi}{4}\right)$$

… (Mathematical Expression 5)

According to these expressions, (Expression 4) and (Expression 5), the phase of the left eye signal L is advanced by $\pi / 4$ with respect to the input signal S, and the phase of the right eye signal R is delayed by $\pi / 4$ with respect to the input signal S. Namely, the left eye signal L is a signal whose amplitude is $\sqrt{2}$ times as large as the input signal and that is shifted by 1/8 of a period determined by an angular frequency $\omega$ in a horizontal left direction, and in the same way, the right eye signal R is a signal whose amplitude is $\sqrt{2}$ times as large as the input signal and that is shifted by 1/8 of a period determined by the angular frequency $\omega$ in a horizontal right direction. In this way, a phase difference of only $\pi / 2$ occurs between the left eye signal L and the right eye signal R, and this phase difference is perceived as the retinal image difference, and it is possible to obtain depth feel.

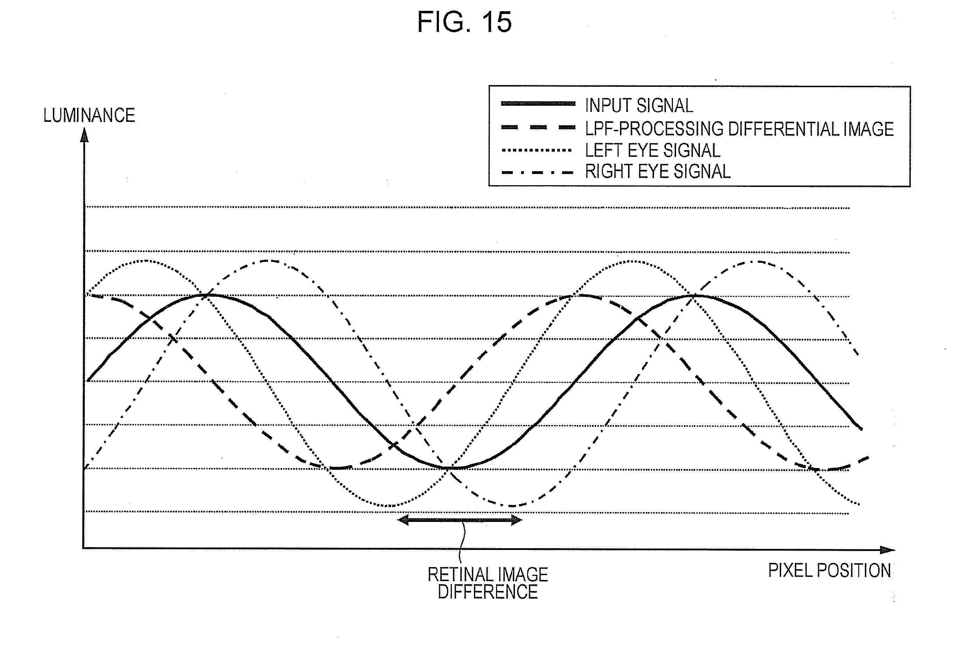

As described above, the retinal image difference varies depending on the angular frequency $\omega$. Fig. 15 illustrates waveforms when the angular frequency of the input signal becomes half as large as in Fig. 14. As will be understood from the drawing, the retinal image difference becomes two times as large as in the case of Fig. 14, and, compared with the input signal in Fig. 14, the input signal is perceived at a location at a far side in the case of binocular stereoscopic viewing.

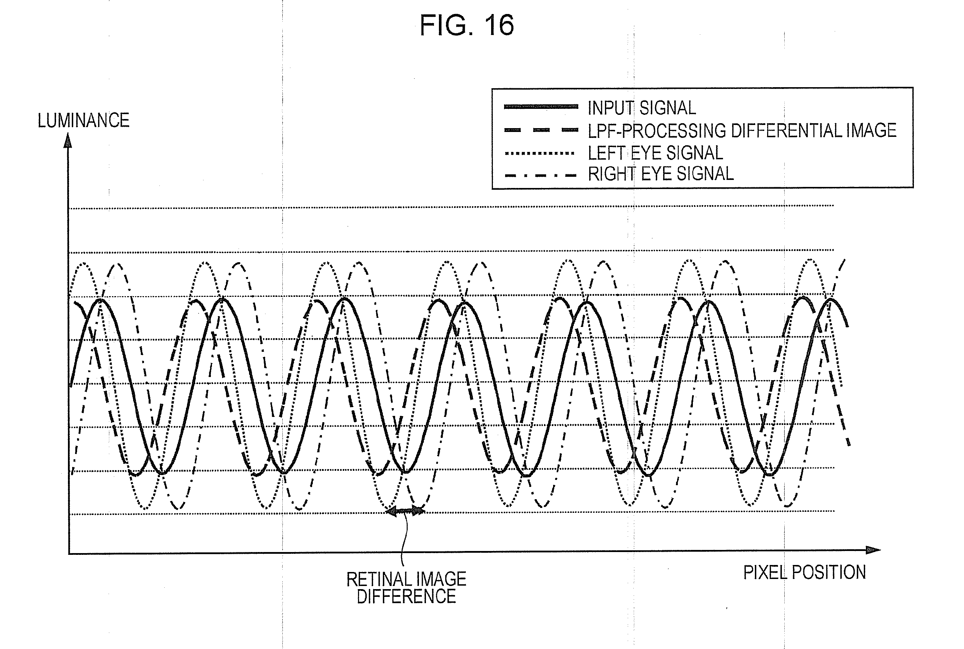

In addition, Fig. 16 illustrates waveforms when the angular frequency of the input signal becomes two times as large as in Fig. 14. As will be understood from the drawing, the retinal image difference becomes half as large as in the case of Fig. 14, and, compared with the input signal in Fig. 14, the input signal is perceived at a location at a near side in the case of binocular stereoscopic viewing.

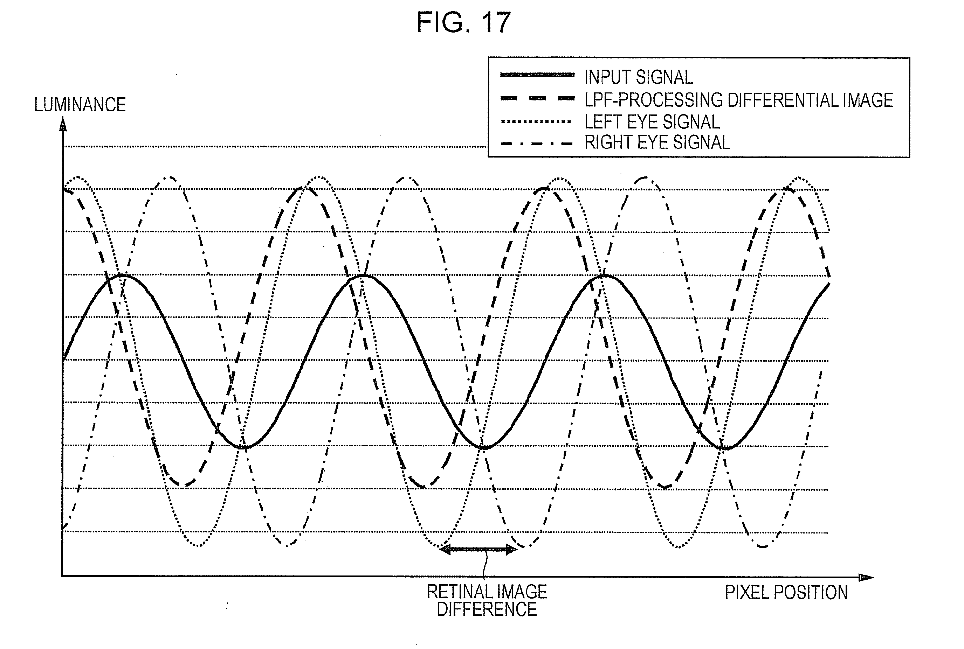

Furthermore, Fig. 17 illustrates waveforms when the amplitude of the differential signal D is controlled. While Fig. 17 illustrates a case in which the differential signal D is amplified two-fold, the controlled differential signal F is expressed in an expression (Expression 6) so as to be more generalized.

$$F = k \cos \omega x \ \dots \ \text{(Expression 6)}$$

Here, k is a positive real number.

In addition, the above-mentioned F corresponds to the aforementioned parallax enhancement signal E generated on the basis of the conversion processing for the differential signal D.

At this time, the left eye signal L and the right eye signal R are expressed in accordance with an expression (Expression 7) and an expression (Expression 8) as follows.

[Mathematical Formula 2]

$$L = S + F = \sin \omega x + k \cos \omega x = \sqrt{1 + k^2} \sin(\omega x + \alpha)$$

… (Mathematical Expression 7)

$$R = S - F = \sin \omega x - k \cos \omega x = \sqrt{1 + k^2} \sin(\omega x - \alpha)$$

… (Mathematical Expression 8)

Here, $\alpha$ is within a range of $0$ to $\pi/2$, and is expressed in accordance with the following expression (Expression 9).

[Mathematical Formula 3]

$$\alpha = \arccos \frac{1}{\sqrt{1 + k^2}}$$

…(Mathematical Expression 9)

In the above-mentioned expression (Expression 9), when the amplification value k of the differential signal is increased, $\alpha$ increases. Therefore, a phase difference between the input signal S and the left eye signal L and a phase difference between the input signal S and the right eye signal R become large. Accordingly, a phase difference between the left eye signal L and the right eye signal R also becomes large, and the retinal image difference is perceived to be large. As a result, the input signal is perceived at a location at a farther side in the case of binocular stereoscopic viewing.

In this way, the right eye image and the left eye image generated by the image processing device 100 according to an embodiment of the present technology are images where the retinal image difference varies depending on the spatial frequency of the image, the retinal image difference becomes small in a region whose spatial frequency is high, and the retinal image difference becomes large in a region whose spatial frequency is low. When such an image is separated into the right eye and the left eye of a person and presented, the person perceives the region whose retinal image difference is small to be located at a near side and the region whose retinal image difference is large to be located at a far side.

However, as described above, the image processing device 100 according to an embodiment of the present technology simply performs processing according to a local spatial frequency, and retinal image differences that differ in an edge portion and a texture portion are also provided for individual subjects within the image. Accordingly, since it is difficult for the observer to perceive a correct depth only from the retinal image difference, it is considered that, using the painterly characteristics (composition, the anteroposterior relationship of an object, and a spatial frequency) of the image, motion parallax, and the like as clues, the person can perceive the comprehensive depth of the image on the analogy of these pieces of image information.

In addition, as described above, since the retinal image difference is caused to occur mainly in the edge portion of the image, the retinal image differences are also provided for fine structures such as a branch of a tree, an electric wire, and hair. Therefore, it is also possible to express the stereoscopic effect of a fine subject.

Using such characteristics, the image processing device according to an embodiment of the present technology realizes the generation configuration of the binocular parallax image, in which natural stereoscopic viewing is realized only by implementing local modulation processing on the image.

Furthermore, the image processing device according to an embodiment of the present technology generates the right eye image (Right) and the left eye image (Left) in accordance with the expression described earlier (Expression 1). Namely, when the luminance level of video data corresponding to the input signal is defined as (S) and the signal level of the parallax enhancement signal [enh] obtained by subjecting the differential signal illustrated in (b) in Fig. 8 to nonlinear conversion is defined as (E), the right eye image signal (Right) and the left eye image signal (Left) are generated in accordance with the following expression.

$$\texttt{Right Eye Image Signal: Right = S - E}$$

$$\texttt{Left Eye Image Signal: Left = S + E}$$

As will be understood from this expression, an addition signal generated by adding the right eye image signal and the left eye image signal to each other is as follows.

$$\texttt{Addition Signal = (S + E) + (S - E) = S}$$

As a result, the addition signal becomes equivalent to the input image.

Accordingly, for example, in a case in which display is performed in the stereoscopic display device of the time-division method as described with reference to Fig. 11 or Fig. 12, when the user who is an observer observes the image with removing the eyeglasses of the liquid-crystal shutter method, the user perceives an image in which the left eye image (Left) and the right eye image (Right) are integrated owing to the temporal integration function of the visual system of a person. This image becomes the above-mentioned addition signal, namely,

$$\texttt{Addition Signal = (S + E) + (S - E) = S}$$

the above-mentioned signal [S]. Namely, the two-dimensional image of the input can be perceived without change. Namely, the image is not perceived as an unnatural duplex image, and it is possible to observe the image as an image subjected to no processing.

In addition, in a case in which, as illustrated in Fig. 13, display is performed in the stereoscopic display device of the space division method, when polarization eyeglasses are removed, an image in which two pixels in a vertical direction are added is perceived if the image is observed from a distance too long for one pixel in the vertical direction to be perceived. This image becomes the above-mentioned addition signal, namely,

$$\texttt{Addition Signal = (S + E) + (S - E) = S}$$

the above-mentioned signal [S]. On the other hand, since the eyesight of a person for the retinal image difference is about ten times as high as usual eyesight, even if being observed from such a distance, it is possible to fully recognize the retinal image difference between the left eye image and the right eye image. Accordingly, when the polarization eyeglasses are removed, the image is not perceived as an unnatural duplex image, and it is possible to observe the image as an image subjected to no processing. In addition, when the polarization eyeglasses are worn, stereoscopy becomes available.

In this way, the image generated by the image processing device according to an embodiment of the present technology is displayed using the stereoscopic display device, and hence when eyeglasses used for stereoscopic viewing are worn, stereoscopy is available. In addition, when the eyeglasses used for stereoscopic viewing are not worn, it is possible to perceive the image as an original two-dimensional image subjected to no conversion.

(1-4. Processing Sequence of Image Conversion Unit in Image Processing Device According to Embodiment of Present Technology)

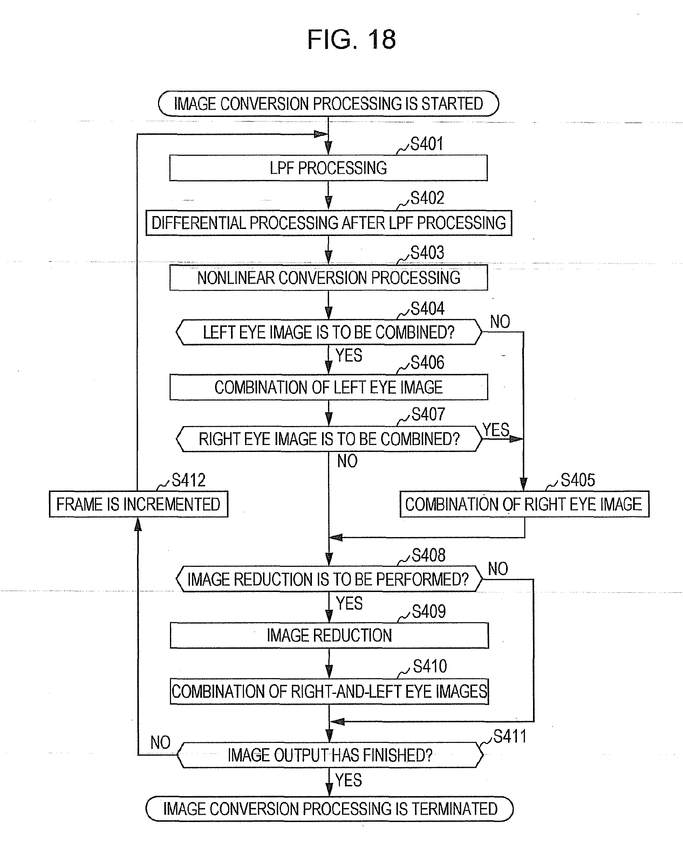

Next, the sequence of processing executed by the image conversion unit 130 in the image processing device 100 according to an embodiment of the present technology will be described with reference to a flowchart illustrated in Fig. 18. In addition, the flowchart illustrated in Fig. 18 is processing performed when the input image is a moving image (video data).

In Step S401, the low-frequency pass filter 131 (refer to Fig. 5) performs low-frequency pass filter processing for the luminance signal of the video data input to the image conversion unit 130. For example, the signal in (a2) in Fig. 8 is generated on the basis of the low-frequency pass filter processing for the (a) input signal in Fig. 8, namely, a processing signal based on the low-frequency pass filter is generated.

Next, in Step S402, the differentiator 132 (refer to Fig. 5) performs differential processing for the processing signal based on the low-frequency pass filter. Namely, the (b) differential signal in Fig. 8 is generated on the basis of the differential processing for the processing signal based on the low-frequency pass filter in (a2) in Fig. 8.

In Step S403, the nonlinear conversion unit 133 (refer to Fig. 5) performs nonlinear conversion processing for the differential signal output from the differentiator 132. For example, this nonlinear conversion processing is nonlinear conversion processing corresponding to such a graph as illustrated in Fig. 6.

Processing operations in and subsequent to Step S404 are processing operations performed in the image synthesis unit 134. In Step S404, a control unit within the image synthesis unit 134 determines whether or not the combination of the left eye image for a current input frame is to be performed. This determination processing is determined in accordance with the display method of the image display device, output by the image processing device 100, and a frame counter value provided within the image synthesis unit 134. A frame counter is a counter holding a value corresponding to the frame number of an input image frame.

When the output method of the image display device is the time-division output method illustrated in Fig. 11, the image synthesis unit 134 determines whether or not the left eye image is to be output, in accordance with the value of the frame counter. Namely, in the case of the time-division output method illustrated in Fig. 11, control is performed so that the left eye image is output only in one of an even frame and an odd frame. When, in accordance with the value of the frame counter, it is determined that the left eye image is to be output, the processing proceeds to Step S405. On the other hand, when, in accordance with the value of the frame counter, it is determined that a frame is a frame for outputting the right eye image, the processing proceeds to Step S406.

In addition, in the case of a method other than the time-division output method illustrated in Fig. 11, namely, in the case of the time-division output method based on a twofold frame rate or the space division output method illustrated in Fig. 13, or in a case in which display control is performed on an image display device side by inputting the left eye image and the right eye image, illustrated in Fig. 10, the image synthesis unit 134 determines that the left eye image is combined with all input frames and the processing proceeds to Step S405.

In Step S405, the image synthesis unit 134 generates the left eye image (Left) in accordance with the expression described earlier (Expression 1). Namely, as illustrated in Fig. 8, when the luminance level of video data corresponding to the (a) input signal in Fig. 8 is defined as (S) and the signal level of the parallax enhancement signal [enh] obtained by subjecting the differential signal illustrated in (b) in Fig. 8 to nonlinear conversion is defined as (E), the left eye image signal (Left) is generated in accordance with the following expression.

```
Left Eye Image Signal: Left = S + E
```

On the other hand, in Step S404, it is determined that the combination of the left eye image for the current input frame is not to be performed, the processing proceeds to Step S406, and the right eye image for the current input frame is generated. Namely, as illustrated in Fig. 8, when the luminance level of video data corresponding to the (a) input signal in Fig. 8 is defined as (S) and the signal level of the parallax enhancement signal [enh] obtained by subjecting the differential signal illustrated in (b) in Fig. 8 to nonlinear conversion is defined as (E), the right eye image signal (Right) is generated in accordance with the following expression.

```
Right Eye Image Signal: Right = S - E
```

The combination of the above signal is performed.

When, in Step S405, the generation of the left eye image has finished, in Step S407, it is determined whether or not the right eye image is also to be generated for the same frame as the generation frame of the left eye image. When the output method of the image processing device is the time-division output method illustrated in Fig. 11, since only an image for one of the left eye and the right eye is combined in each frame, it is determined that the right eye image is not to be generated, the processing proceeds to Step S408.

In addition, in the case of a method other than the time-division output method illustrated in Fig. 11, namely, in the case of the time-division output method based on a twofold frame rate illustrated in Fig. 12 or the space division output method illustrated in Fig. 13, or in a case in which display control is performed on an image display device side by inputting the left eye image and the right eye image, illustrated in Fig. 10, the image synthesis unit 134 determines that the right eye image is combined with all input frames and the processing proceeds to Step S406. As described above, the processing in Step S406 is the generation processing of the right eye image according to the expression described earlier (Expression 1).

In Step S408, the control unit in the image synthesis unit 134 determines whether or not the reduction processing of the image is to be performed. When the output format of the image processing device is the space division output method illustrated in Fig. 13, it is determined that the reduction processing of the image is to be performed, and the processing proceeds to Step S409. When the output format of the image processing device is a method other than the space division output method illustrated in Fig. 13, namely, one of the method for simultaneously outputting the left eye image and the right eye image, illustrated in Fig. 10, the time-division output method illustrated in Fig. 11, and the time-division output method based on a twofold frame rate illustrated in Fig. 12, the image reduction processing is not necessary, and the processing proceeds to Step S411.

In Steps S409 to S410, as described earlier with reference to Fig. 13, the image synthesis unit 134 generates the (e) binocular parallax image, illustrated in Fig. 13, from the (c) right eye image and the (d) left eye image. Namely, each of the images of the (c) right eye image and the (d) left eye image is subjected to 1/2 reduction processing in a vertical direction with the phase of each image being shifted by one line (S409). Furthermore, the image synthesis unit 134 alternately combines the left eye image and the right eye image, obtained in such a way, in units of horizontal lines, thereby generating one (d) binocular parallax image (S410).

In Step S411, it is determined whether or not the image output processing in the image output unit 150 has finished. When the image output processing has finished, the image conversion processing is terminated. When the image output processing has not finished, the processing proceeds to Step S412.

In Step S412, the frame count is incremented, the processing proceeds to Step S401, and subsequently, the processing operations in Step S401 to Step S411 are repeated.

As explained above, according to the image processing device of an embodiment of the present technology, a configuration is adopted in which two-dimensional image data is input, the amount of characteristic of the image, namely, an edge portion that is a luminance change portion is extracted, and the image form of the edge portion is changed, thereby generating a pseudo right eye image and a pseudo left eye image. According to this configuration, it is possible to generate a binocular parallax image suitable for use in the stereoscopic display device.

Furthermore, according to the image processing device of an embodiment of the present technology, as illustrated in Fig. 8, when the luminance level of video data corresponding to the (a) input signal in Fig. 8 is defined as (S) and the signal level of the parallax enhancement signal [enh] obtained by subjecting the differential signal illustrated in (b) in Fig. 8 to nonlinear conversion is defined as (E), the right eye image signal and the left eye image signal are generated in accordance with the following expression.

$$\text{Right Eye Image Signal: Right} = S - E$$

$$\text{Left Eye Image Signal: Left} = S + E$$

As will be understood from this expression, an addition signal generated by adding the right eye image signal and the left eye image signal to each other is as follows.

$$\text{Addition Signal} = (S + E) + (S - E) = S$$

As a result, the addition signal becomes equivalent to the input image.

In this way, the addition signal is set so as to become equal to or nearly equal to the input signal. Accordingly, in a case in which a user views the image displayed on the stereoscopic display device, when eyeglasses used for stereoscopic viewing is worn, it is possible to perceive the stereoscopic representation thereof, and when eyeglasses used for stereoscopic viewing is not worn, it is possible to perceive the image as a usual two-dimensional image. Namely, it is possible to appreciate the image with or without eyeglasses being worn. In addition, according to the image conversion device according to an embodiment of the present technology, parallax between the left eye image and the right eye image is very small, and it is possible to reduce the degree of fatigue when the eyeglasses used for stereoscopic viewing is worn.

[2. Another Embodiment of Image Processing Device of Present Technology]

(2-1. Embodiment where Low-Frequency Pass Filter Is Set in Stage Posterior to Image Synthesis Unit (Second Embodiment))

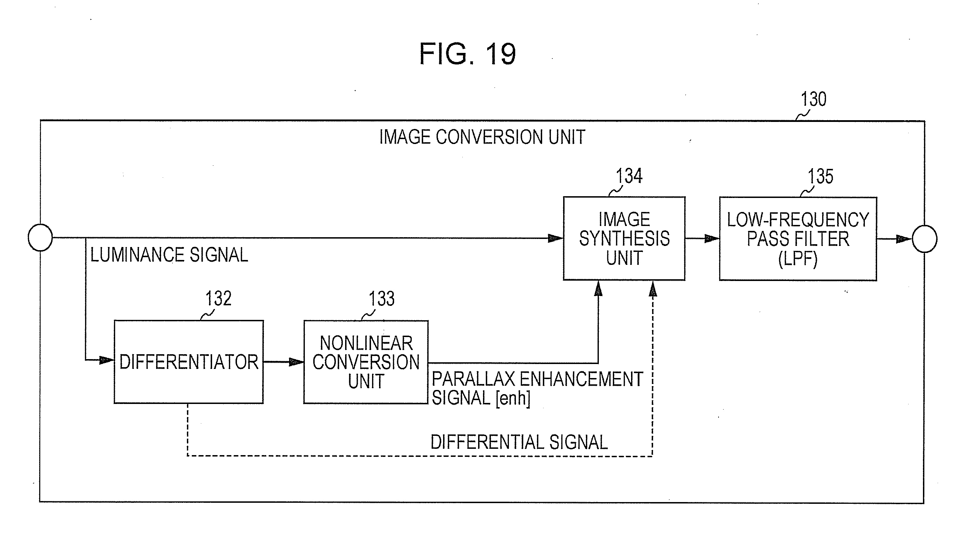

In the image conversion unit 130 described earlier with reference to Fig. 5, the low-frequency pass filter (LPF) 131 has been configured in a stage anterior to the differentiator 132.
While not being limited to the setting illustrated in Fig. 5, the position of the low-frequency pass filter (LPF) 131 may be set at another position.
For example, a setting illustrated in Fig. 19 may be adopted.
An image conversion unit 130 illustrated in Fig. 19 illustrates an example of a modification to the image conversion unit 130 in the image processing device 100 illustrated in Fig. 1.
The image conversion unit 130 illustrated in Fig. 19 differs from the configuration of the image conversion unit 130 illustrated in Fig. 5 described earlier in the previous embodiment in that a configuration is adopted in which a low-frequency pass filter (LPF) 135 is set in the output unit of the image synthesis unit 134.
In this configuration, high-frequency reduction processing based on the low-frequency pass filter (LPF) 135 is performed for the output signal of the image synthesis unit. Owing to this processing, it is also possible to obtain an advantageous effect that a high-frequency enhancement signal due to a differential signal based on the differentiator 132 is reduced, and it is possible to resolve or reduce the unnaturalness of an output image.
In this configuration, the outputs of the image synthesis unit 134 are the (c) left image signal and the (d) right eye image signal, illustrated in Fig. 7. The low-frequency pass filter (LPF) 135 illustrated in Fig. 19 performs filtering processing on the (c) left image signal and the (d) right eye image signal, illustrated in Fig. 7.
Owing to this processing, it is possible to reduce the high-frequency enhancement signal based on the addition/subtraction of the differential signal due to the differentiator 132, and it is possible to resolve or reduce the unnaturalness of an output image.

(2-2. Embodiment where Low-Frequency Pass Filters Are Set Both in Stage Anterior to Differentiator and Stage Posterior to Image Synthesis Unit (Third Embodiment))

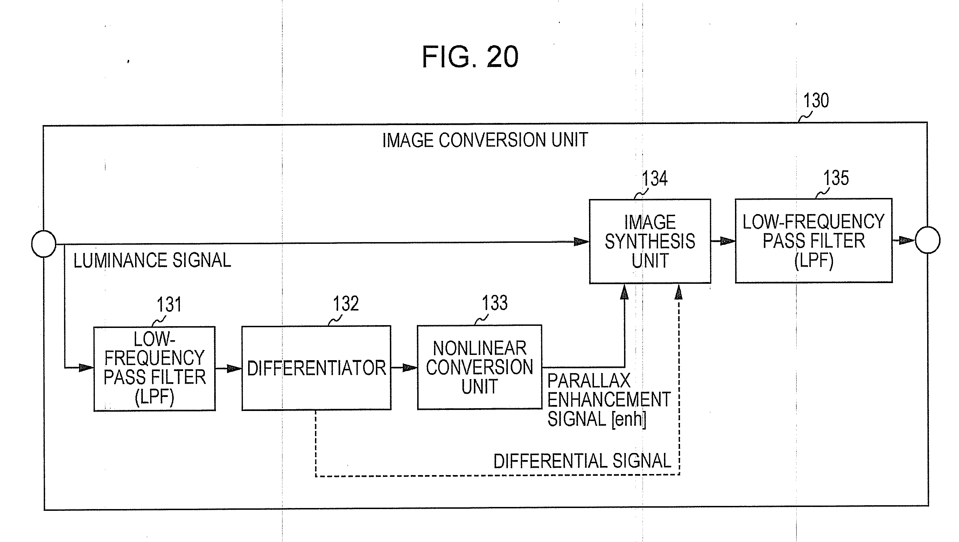

Furthermore, low-frequency pass filters may also be set both in a stage anterior to the differentiator and a stage posterior to the image synthesis unit.
This embodiment will be described with reference to Fig. 20.
An image conversion unit 130 illustrated in Fig. 19 illustrates an example of a modification to the image conversion unit 130 in the image processing device 100 illustrated in Fig. 1.
In the same way as the configuration of the image conversion unit 130 illustrated in Fig. 5 described earlier in the previous embodiment, in the image conversion unit 130 illustrated in Fig. 20, the low-frequency pass filter (LPF) 131 is set in a stage anterior to the differentiator 132. Furthermore, another low-frequency pass filter (LPF) 135 is set in a stage posterior to the image synthesis unit 134.
Owing to this processing, it is also possible to obtain an advantageous effect that a high-frequency enhancement signal due to a differential signal based on the differentiator 132 is reduced, and it is possible to resolve or reduce the unnaturalness of an output image.

(2-3. Embodiment where Image Reduction Unit Is Set in Stage Posterior to Image Synthesis Unit (Fourth Embodiment))

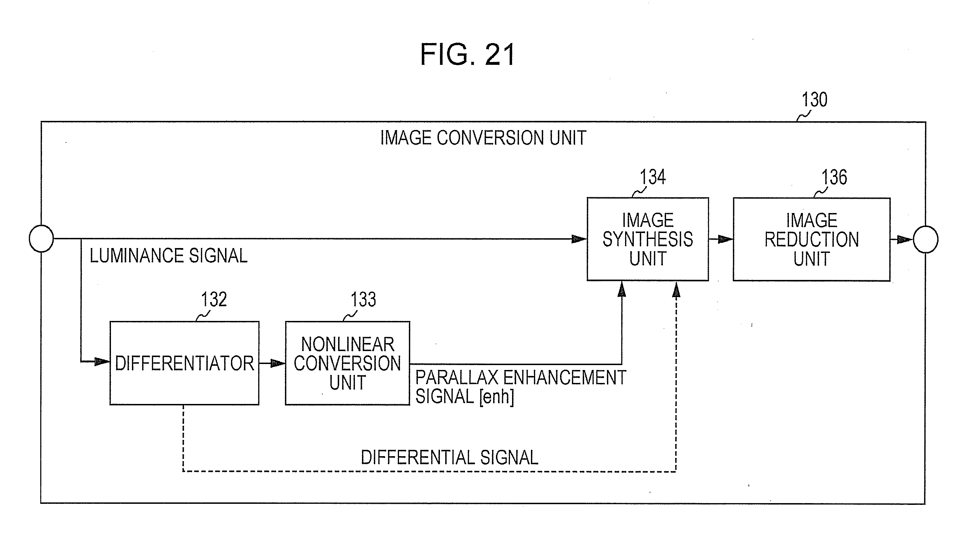

Furthermore, by setting the image reduction unit in a stage posterior to the image synthesis unit, in place of the low-frequency pass filter, it is also possible to obtain the same advantageous effect, namely, it is also possible to reduce the effect of the high-frequency enhancement signal due to the differential signal of the differentiator.
This embodiment will be described with reference to Fig. 21.
An image conversion unit 130 illustrated in Fig. 21 illustrates an example of a modification to the image conversion unit 130 in the image processing device 100 illustrated in Fig. 1.
The image conversion unit 130 illustrated in Fig. 21 includes a configuration in which the image reduction unit 136 is set in the output unit of the image synthesis unit 134.

In this configuration, the image reduction unit 136 executes image reduction processing for the output signal of the image synthesis unit 134. In the reduction processing of the image, usually, since an amplitude characteristic exhibits the same characteristic as the low-frequency pass filter, it is possible to exhibit the same effect as the low-frequency pass filter, by inserting the image reduction processing.

Accordingly, as illustrated in Fig. 21, the image reduction unit 136 executes the image reduction processing for the output signal of the image synthesis unit 134, and hence it is also possible to obtain an advantageous effect that a high-frequency enhancement signal due to a differential signal based on the differentiator 132 is reduced, and it is possible to resolve or reduce the unnaturalness of an output image.

[3. Example of Configuration of Image Processing Device Including Image Display Unit]

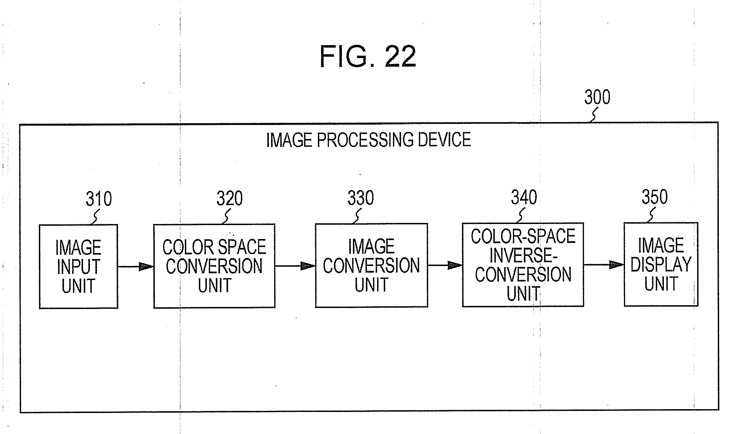

The image processing device illustrated in Fig. 1 has been described as an image processing device including no image display unit. However, the image processing device may also be configured as an image processing device including an image display unit. Fig. 22 is a diagram illustrating an embodiment of the image processing device including the image display unit.

In an image input unit 310, an image display device 300 receives a still image file output from a digital still camera or the like or moving image data output from a camcorder or the like, and converts the still image file or the moving image data into an internal data format. Here, the internal data format is baseband moving image data, and is the video data of the three primary colors of red (R), green (G), and blue (B) or video data including signals of luminance (Y) and color differences (Cb, Cr) or (Y, U, V). An identification signal of a color space is superposed on the internal data format, and any color space may be adopted with which a color space conversion unit 320 in a subsequent stage complies.

The video data output from the image input unit 310 is input to the color space conversion unit 320, and converted into a luminance signal and color-difference signals. At this time, when the input video data complies with data to be the processing target of the image conversion unit, for example, a Y/Cb/Cr color space, the color space conversion unit 320 outputs the input video data without converting a color space. When the input video data complies with an R/G/B color space or another color space, the color space conversion unit 320 converts the input video data into a luminance (Y) and color difference (Cb, Cr) signals and outputs the luminance (Y) and the color difference (Cb, Cr) signals.

Here, the color space of the video data output from the color space conversion unit 320 is not limited to the Y/Cb/Cr color space, and any color space may be adopted that is a color space in which a luminance component and color components are separated.

The video data output from the color space conversion unit 320 is input to an image conversion unit 330. The image conversion unit 330 generates binocular parallax images used for a left eye and a right eye on the basis of the processing described earlier, and combines these images in accordance with the format of an image display unit 350 to output these images.

The video data output from the image conversion unit 330 is input to a color-space inverse-conversion unit 340, and converted from the Y/Cb/Cr color space into an R/G/B color space.

The video data output from the color-space inverse-conversion unit 340 is input to the image display unit 350. The image display unit 350 includes a configuration in which an image output unit is combined with a display unit, and performs image display in accordance with one of stereoscopic display methods (a time-division method or a space division method) illustrated hereinafter.

(Time-Division Method)

In the stereoscopic display method of the time-division method, the odd frame and the even frame of input video data are individually recognized as the left eye image and the right eye image (alternatively, the right eye image and the left eye image), and eyeglasses worn by a user and based on a liquid-crystal shutter method are controlled, thereby temporally alternately presenting images to a left eye and a right eye. In this display method, the image display unit 350 controls timing to switch the output of the left eye image and the right eye image as a setting that the timing is caused to be synchronized with the shutter switching of a right-and-left eyeglasses unit of eyeglasses worn by a viewer.

(Space Division Method)

In the stereoscopic display method of the space division method, a polarization filter is put on the front surface of a display portion, the polarization filter being set so that a polarization direction varies with respect to each horizontal line, and when being viewed with eyeglasses worn by a user and based on a polarization filter method, a video is caused to be separated for a left eye and a right eye with respect to each horizontal line and observed.

As explained above, according to the image processing device of an embodiment of the present technology, two-dimensional image data is input, and it is possible to perform stereoscopic display through use of binocular parallax, by generating the right eye image and the left eye image from the amount of characteristic of the image in a pseudo manner. Furthermore, according to the image processing device of an embodiment of the present technology, image conversion is performed so that the addition of the left eye image and the right eye image becomes equivalent to the input image, and hence when eyeglasses used for stereoscopic viewing are worn, it is possible to perceive stereoscopic representation. In addition, when the eyeglasses used for stereoscopic viewing are not worn, it is possible to perceive the image as a usual two-dimensional image. Therefore, it is possible to appreciate the image with or without eyeglasses being worn. In addition, according to the image conversion device of an embodiment of the present technology, parallax between the left eye image and the right eye image is very small, and it is possible to reduce the degree of fatigue when the eyeglasses used for stereoscopic viewing are worn.

As above, the present technology has been described in detail with reference to specific embodiments. However, it is obvious that those skilled in the art may make modifications and alterations to the embodiments insofar as they are within the scope of the present technology. Namely, since the present technology has been disclosed in the form of exemplification, it should be understood that the present technology is not interpreted in a limited way. In order to determine the scope of the present technology, the section of the appended claims should be considered.

In addition, a series of processing described in the specification may be executed using hardware, software, or the composite configuration of the two. When the processing based on the software is executed, a program recording therein a processing sequence may be installed into a memory within a computer embedded into dedicated hardware and executed, or a program may be installed into a general-purpose computer capable of executing various kinds of processing and executed. For example, the program may be preliminarily recorded in a recording medium. In addition to the installation from the recording medium to the computer, the program may be received through a network such as a local area network (LAN) or Internet and installed into a recording medium such as an internal hard disk or the like.

In addition, various kinds of processing described in the specification is not only executed in chronological order in accordance with the description but may also be executed in parallel or individually in response to the processing capability of a device executing the processing or as necessary. In addition, in the present specification, the term, "system", is a configuration in which a plurality of devices are logically assembled, and is not limited to a configuration in which a device of each configuration is located within a same chassis.

The present disclosure contains subject matter related to that disclosed in Japanese Priority Patent Application JP 2010-269784 filed in the Japan Patent Office on December 2, 2010, the entire content of which is hereby incorporated by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

**Claims**

**1.** An image processing device comprising:

an image input unit inputting a two-dimensional image signal;
an image conversion unit inputting an image signal output from the image input unit and generating and outputting a left eye image and a right eye image used for realizing binocular stereoscopic viewing; and
an image output unit outputting the left eye image and the right eye image output from the image conversion unit, wherein
the image conversion unit includes a configuration in which the amount of spatial characteristic of the input image signal is extracted and the image generation of at least one of the left eye image and the right eye image is performed on the basis of image conversion processing in which enhancement processing to which the amount of characteristic is applied is performed on the input image signal, and
the image conversion unit further executes at least one of
a filtering processing operation which is based on a low-frequency pass filter and to be performed on the input image signal as pre-processing before the extraction of the amount of characteristic, and

a filtering processing operation or an image reduction processing operation, which is based on a low-frequency pass filter and to be performed as post-processing on the generated left eye image and right eye image.

2. The image processing device according to claim 1, wherein
the image conversion unit includes a configuration in which
a luminance differential signal of the input image signal or a luminance differential signal of a signal after the filtering processing operation based on the low-frequency pass filter has been performed on the input image signal is extracted, the luminance differential signal is set as the amount of characteristic, one conversion signal of a conversion signal obtained by adding the amount of characteristic to the input image signal or a conversion signal obtained by subtracting the amount of characteristic from the input image signal is generated as the left eye image or the right eye image, and a non-conversion signal where the input image signal has been subjected to no processing is output as an image used for an eye different from that of the conversion signal.

3. The image processing device according to claim 1, wherein
the image conversion unit includes a configuration where processing is performed in which
a luminance differential signal of the input image signal or a luminance differential signal of a signal after the filtering processing operation based on the low-frequency pass filter has been performed on the input image signal is extracted, the luminance differential signal is set as the amount of characteristic, a signal obtained by adding the amount of characteristic to the input image signal and a signal obtained by subtracting the amount of characteristic from the input image signal are generated, and a pair of the two signals is generated as a pair of the left eye image and the right eye image.

4. The image processing device according to claim 1, wherein
the image conversion unit includes a configuration where processing is performed in which
a luminance differential signal of the input image signal or a luminance differential signal of a signal after the filtering processing operation based on the low-frequency pass filter has been performed on the input image signal is extracted, a signal generated by subjecting the luminance differential signal to nonlinear conversion is set as the amount of characteristic, a signal obtained by adding the amount of characteristic to the input image signal or a signal obtained by subtracting the amount of characteristic from the input image signal is generated, and one of these signals is generated as the left eye image or the right eye image.

5. The image processing device according to claim 1, wherein
the image conversion unit includes a configuration where processing is performed in which
the left eye image and the right eye image are generated for each of frames included in a moving image.

6. The image processing device according to claim 5, further comprising:

an image output unit outputting the left eye image and the right eye image generated by the image conversion unit, wherein
the image output unit includes a configuration where processing is performed in which the left eye image and the right eye image generated by the image conversion unit are alternately output at twice the rate of an input image frame rate.

7. The image processing device according to claim 1, wherein
the image conversion unit includes a configuration where processing is performed in which
only one of the left eye image and the right eye image is alternately generated for each of frames included in a moving image.

8. The image processing device according to claim 1, wherein
the image conversion unit includes a configuration where processing is performed in which
the left eye image and the right eye image are generated for each of frames included in a moving image, and
a binocular parallax image is generated that alternately includes line data configuring the generated left eye image and right eye image.

9. The image processing device according to claim 1, wherein
the image conversion unit includes a configuration where processing is performed in which
the left eye image and the right eye image are generated as a setting in which the addition signal of the generated left eye image and right eye image becomes equal to the input signal or in which the addition signal of the generated left eye image and right eye image becomes nearly equal to the input signal.

**10.** The image processing device according to claim 1, further comprising:

an image display unit displaying an image generated by the image conversion unit.

**11.** The image processing device according to claim 10, wherein the image display unit includes a configuration where stereoscopic display processing is performed that is based on a time-division method and in which the left eye image and the right eye image are alternately output.

**12.** The image processing device according to claim 11, wherein the image display unit includes a configuration where, when the stereoscopic display processing that is based on the time-division method and in which the left eye image and the right eye image are alternately output is performed, display switching is performed so that timing to switch the output of the left eye image and the right eye image is caused to be synchronized with the shutter switching of a right-and-left eyeglasses unit of eyeglasses worn by an image observer.

**13.** The image processing device according to claim 10, wherein the image display unit includes a configuration in which a polarization filter is put on the front surface of a display portion, the polarization filter being set so that a polarization direction varies with respect to each horizontal line, and includes a configuration where a binocular parallax image is displayed that alternately includes line data configuring the left eye image and right eye image generated by the image conversion unit.

**14.** An image processing method in an image processing device, comprising:

causing an image input unit to input a two-dimensional image signal;
causing an image conversion unit to input an image signal output from the image input unit and to generate and output a left eye image and a right eye image used for realizing binocular stereoscopic viewing; and
causing an image output unit to output the left eye image and the right eye image output from the image conversion unit, wherein
in the image conversion,
the amount of spatial characteristic of the input image signal is extracted and the image generation of at least one of the left eye image and the right eye image is performed on the basis of image conversion processing in which enhancement processing to which the amount of characteristic is applied is performed on the input image signal, and
there is further executed at least one of
a filtering processing operation which is based on a low-frequency pass filter and to be performed on the input image signal as pre-processing before the extraction of the amount of characteristic, and
a filtering processing operation or an image reduction processing operation, which is based on a low-frequency pass filter and to be performed as post-processing on the generated left eye image and right eye image.

**15.** A program causing image processing to be executed in an image processing device, comprising:

causing an image input unit to input a two-dimensional image signal;
causing an image conversion unit to input an image signal output from the image input unit and to generate and output a left eye image and a right eye image used for realizing binocular stereoscopic viewing; and
causing an image output unit to output the left eye image and the right eye image output from the image conversion unit, wherein
in the image conversion,
the amount of spatial characteristic of the input image signal is extracted and the image generation of at least one of the left eye image and the right eye image is caused to be performed on the basis of image conversion processing in which enhancement processing to which the amount of characteristic is applied is performed on the input image signal, and
there is further caused to be executed at least one of
a filtering processing operation which is based on a low-frequency pass filter and to be performed on the input image signal as pre-processing before the extraction of the amount of characteristic, and
a filtering processing operation or an image reduction processing operation, which is based on a low-frequency pass filter and to be performed as post-processing on the generated left eye image and right eye image.

EP 2 461 594 A2

# FIG. 1

100

### IMAGE PROCESSING DEVICE

110

IMAGE INPUT UNIT

120

COLOR SPACE CONVERSION UNIT

130

IMAGE CONVERSION UNIT

140

COLOR-SPACE INVERSE-CONVERSION UNIT

150

IMAGE OUTPUT UNIT

# FIG. 2

IMAGE INPUT UNIT ~110

FRAME MEMORY ~114

MEMORY CARD INTERFACE ~111

USB INTERFACE ~112

VIDEO INTERFACE ~113

DECODER ~115

VIDEO OUTPUT UNIT ~116

# FIG. 3

```
( IMAGE INPUT PROCESSING IS STARTED )
                    │
                    ▼
        ┌─────────────────────────┐  S101
        │ STILL IMAGE INPUT IS STARTED │
        └─────────────────────────┘
                    │            S102
                    ▼
            < MEMORY CARD INPUT? >──── NO ────────────────┐
                    │                                     │
                   YES                                    ▼      S103
                    │                              < USB INPUT? >──── NO
                    │                                     │
                    │                                    YES  S105
                    ▼            S104                     │
    ┌───────────────────────────────┐    ┌──────────────────────────────┐
    │ IMAGE IS READ FROM MEMORY CARD │    │ IMAGE IS READ FROM USB       │
    └───────────────────────────────┘    └──────────────────────────────┘
                    │◄──────────────────────────────────┘
                    ▼            S106
        ┌─────────────────────────┐
        │ STORED IN FRAME MEMORY  │
        └─────────────────────────┘
                    │◄──────────────────────────────┐
                    ▼            S107                │
        ┌─────────────────────────┐                 │
        │ READ OUT FROM FRAME      │                │
        │ MEMORY                   │                │
        └─────────────────────────┘                 │
                    ▼            S108                │
        ┌─────────────────────────┐                 │
        │ DECODE PROCESSING        │                │
        └─────────────────────────┘                 │
                    ▼            S109          S111  │
        ┌─────────────────────────┐    ┌──────────────────────────┐
        │ VIDEO OUTPUT OF ONE FRAME│    │ ADDRESS IS INITIALIZED   │
        └─────────────────────────┘    └──────────────────────────┘
                    ▼            S110                │
            < IMAGE OUTPUT HAS FINISHED? >── NO ─────┘
                    │
                   YES◄────────────────────────────────
                    ▼
    ( IMAGE INPUT PROCESSING IS TERMINATED )
```

# FIG. 4

```
        ( IMAGE INPUT PROCESSING IS STARTED )
                        │
                        ▼
        ┌──────────────────────────────┐  S201
        │  MOVING IMAGE INPUT IS STARTED │
        └──────────────────────────────┘
                        │
                   S202 │
        ┌───────────────────────┐  NO
        <    VIDEO DATA INPUT?    >──────────┐
        └───────────────────────┘            │
                  │ YES                        ▼            S203
                  │                   ┌─────────────────┐  NO
                  │                   <    USB INPUT?    >──────────┐
                  │                   └─────────────────┘            │
                  │                        │ YES                      ▼        S204
                  │                        │            ┌────────────────────┐  NO
                  │                        │            <  MEMORY CARD INPUT? >──┐
                  │                        │            └────────────────────┘  │
                  │                        │                   │ YES             │
            S205  ▼                  S206  ▼             S207   ▼                │
  ┌──────────────────────┐  ┌──────────────────┐  ┌──────────────────────┐     │
  │   VIDEO DATA IS READ  │  │  STREAM DATA IS  │  │  STREAM DATA IS READ  │     │
  │ FROM VIDEO INTERFACE  │  │  READ FROM USB   │  │   FROM MEMORY CARD    │     │
  └──────────────────────┘  └──────────────────┘  └──────────────────────┘     │
          │                        │                        │                   │
          │                        └────────────◄───────────┘                   │
          │                        ▼                                            │
          │              ┌──────────────────────┐  S208                         │
          │              │  STORED IN FRAME MEMORY│                             │
          │              └──────────────────────┘                              │
          │                        │                                            │
          │                        ▼                                            │
          │              ┌──────────────────────────┐  S209                    │
          │              │ READ OUT FROM FRAME MEMORY │                         │
          │              └──────────────────────────┘                          │
          │                        │                                            │
          │                        ▼                                            │
          │              ┌──────────────────────┐  S210                        │
          │              │   DECODE PROCESSING   │                             │
          │              └──────────────────────┘                              │
          │                        │                                            │
          │◄───────────────────────┘                                           │
          ▼                                                                     │
  ┌──────────────────────┐  S211                                               │
  │     VIDEO OUTPUT      │                                                     │
  └──────────────────────┘                                                     │
          │◄────────────────────────────────────────────────────────────────────┘
          ▼
  ( IMAGE INPUT PROCESSING IS TERMINATED )
```

EP 2 461 594 A2

# FIG. 5

LUMINANCE SIGNAL → IMAGE SYNTHESIS UNIT (134)

130 IMAGE CONVERSION UNIT

131 LOW-FREQUENCY PASS FILTER (LPF) → 132 DIFFERENTIATOR → 133 NONLINEAR CONVERSION UNIT → PARALLAX ENHANCEMENT SIGNAL [enh]

DIFFERENTIAL SIGNAL

EP 2 461 594 A2

# FIG. 6

OUTPUT
(Out = f(in))

(PARALLAX
ENHANCEMENT
SIGNAL [enh])

Out = f(In)

INPUT (In)
(LUMINANCE DIFFERENTIAL SIGNAL)
(SIGNAL AFTER PASSING THROUGH LPF)

EP 2 461 594 A2

# FIG. 7

(a) INPUT SIGNAL — LUMINANCE — x (HORIZONTAL LINE POSITION) — A — B — 201 — 202 — HIGH-LUMINANCE REGION — x1 — x2 — x3 — x4

(b) DIFFERENTIAL SIGNAL — 0

(c) RIGHT EYE IMAGE SIGNAL — 211 — 212 — LUMINANCE CHANGE REGION MOVES IN RIGHT DIRECTION

(d) LEFT EYE IMAGE SIGNAL — 213 — 214 — LUMINANCE CHANGE REGION MOVES IN LEFT DIRECTION

EP 2 461 594 A2

# FIG. 8

(a) INPUT SIGNAL

LUMINANCE

201

HIGH-LUMINANCE REGION

202

x (HORIZONTAL LINE POSITION)

A    B

x1    x2    x3    x4

(a2) INPUT SIGNAL AFTER PASSING THROUGH LOW-FREQUENCY PASS FILTER

221    222

(b) DIFFERENTIAL SIGNAL

0

(c) RIGHT EYE IMAGE SIGNAL

231    232

LUMINANCE CHANGE REGION MOVES IN RIGHT DIRECTION

(d) LEFT EYE IMAGE SIGNAL

233    234

LUMINANCE CHANGE REGION MOVES IN LEFT DIRECTION

EP 2 461 594 A2

## FIG. 9

(a) INPUT SIGNAL

LUMINANCE

A

B

HIGH-LUMINANCE REGION

x (HORIZONTAL LINE POSITION)

x1    x2    x3    x4

(a2) INPUT SIGNAL AFTER PASSING THROUGH LOW-FREQUENCY PASS FILTER (LPF)

(b) DIFFERENTIAL SIGNAL
0
—— WITH LPF PROCESSING
— — WITHOUT LPF PROCESSING

(c) RIGHT EYE IMAGE SIGNAL
—— WITH LPF PROCESSING
— — WITHOUT LPF PROCESSING

(d) LEFT EYE IMAGE SIGNAL
—— WITH LPF PROCESSING
— — WITHOUT LPF PROCESSING

EP 2 461 594 A2

# FIG. 10

| | FRAME n | FRAME n + 1 | FRAME n + 2 | FRAME n + 3 |
|---|---|---|---|---|

(a) INPUT IMAGE

(b) LPF-PROCESSING DIFFERENTIAL IMAGE

(c) RIGHT EYE IMAGE

(d) LEFT EYE IMAGE

EP 2 461 594 A2

# FIG. 11

|  | FRAME n | FRAME n + 1 | FRAME n + 2 | FRAME n + 3 |
|---|---|---|---|---|
| (a) INPUT IMAGE | | | | |
| (b) LPF-PROCESSING DIFFERENTIAL IMAGE | | | | |
| (c) RIGHT EYE IMAGE | | | | |
| (d) LEFT EYE IMAGE | | | | |

EP 2 461 594 A2

EP 2 461 594 A2

FIG. 12

(a) INPUT IMAGE

(b) LPF-PROCESSING DIFFERENTIAL IMAGE

(c) RIGHT EYE IMAGE

(d) LEFT EYE IMAGE

FRAME n

FRAME n + 1

## FIG. 13

|  | FRAME n | FRAME n + 1 | FRAME n + 2 | FRAME n + 3 |
|---|---|---|---|---|

(a) INPUT IMAGE

(b) LPF-PROCESSING DIFFERENTIAL IMAGE

(c) RIGHT EYE IMAGE

(d) LEFT EYE IMAGE

(e) BINOCULAR PARALLAX IMAGE

EP 2 461 594 A2

# FIG. 14

LUMINANCE

| | | |
|---|---|---|
| ▬▬▬▬▬ | INPUT SIGNAL |
| ▬ ▬ ▬ ▬ | LPF-PROCESSING DIFFERENTIAL IMAGE |
| ·············· | LEFT EYE SIGNAL |
| ─·─·─·─ | RIGHT EYE SIGNAL |

RETINAL IMAGE
DIFFERENCE

PIXEL POSITION

EP 2 461 594 A2

# FIG. 15

LUMINANCE

Legend:
- ───── INPUT SIGNAL
- ─ ─ ─ LPF-PROCESSING DIFFERENTIAL IMAGE
- ·········· LEFT EYE SIGNAL
- ─ · ─ · ─ RIGHT EYE SIGNAL

RETINAL IMAGE
DIFFERENCE

PIXEL POSITION

EP 2 461 594 A2

FIG. 16

INPUT SIGNAL
LPF-PROCESSING DIFFERENTIAL IMAGE
LEFT EYE SIGNAL
RIGHT EYE SIGNAL

LUMINANCE

PIXEL POSITION

RETINAL IMAGE DIFFERENCE

# FIG. 17

LUMINANCE

Legend:
- INPUT SIGNAL
- LPF-PROCESSING DIFFERENTIAL IMAGE
- LEFT EYE SIGNAL
- RIGHT EYE SIGNAL

RETINAL IMAGE
DIFFERENCE

PIXEL POSITION

EP 2 461 594 A2

# FIG. 18

IMAGE CONVERSION PROCESSING IS STARTED

S401
LPF PROCESSING

S402
DIFFERENTIAL PROCESSING AFTER LPF PROCESSING

S403
NONLINEAR CONVERSION PROCESSING

S404
LEFT EYE IMAGE IS TO BE COMBINED? — NO

YES  S406
COMBINATION OF LEFT EYE IMAGE

S407
RIGHT EYE IMAGE IS TO BE COMBINED? — YES

NO

S412
FRAME IS INCREMENTED

S405
COMBINATION OF RIGHT EYE IMAGE

S408
IMAGE REDUCTION IS TO BE PERFORMED? — NO

YES  S409
IMAGE REDUCTION

S410
COMBINATION OF RIGHT-AND-LEFT EYE IMAGES

NO  S411
IMAGE OUTPUT HAS FINISHED?

YES

IMAGE CONVERSION PROCESSING IS TERMINATED

## FIG. 19

EP 2 461 594 A2

## FIG. 20

EP 2 461 594 A2

# FIG. 21

IMAGE CONVERSION UNIT                                                    130

LUMINANCE SIGNAL

134 IMAGE SYNTHESIS UNIT

136 IMAGE REDUCTION UNIT

132 DIFFERENTIATOR

133 NONLINEAR CONVERSION UNIT

PARALLAX ENHANCEMENT SIGNAL [enh]

DIFFERENTIAL SIGNAL

EP 2 461 594 A2

# FIG. 22

300

## IMAGE PROCESSING DEVICE

| 310 | 320 | 330 | 340 | 350 |
|---|---|---|---|---|
| IMAGE INPUT UNIT | COLOR SPACE CONVERSION UNIT | IMAGE CONVERSION UNIT | COLOR-SPACE INVERSE-CONVERSION UNIT | IMAGE DISPLAY UNIT |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9107562 A
- JP 8030806 A
- JP 10051812 A
- JP 2000209614 A
- JP 2005151534 A

- JP 6194602 A
- JP 2010063083 A
- JP 2010269784 A